# EUROPEAN PATENT APPLICATION

(11) **EP 4 340 126 A1**
(43) Date of publication of application: **20.03.2024**
(21) Application number: 22815083.5
(22) Date of filing: 23.05.2022
(51) Int. Cl.: H01Q 1/36, H01Q 1/38

(54) **ANTENNA UNIT, RADAR, AND TERMINAL DEVICE**

(30) Priority: 31.05.2021 CN 202110603601
(71) Applicant: Huawei Technologies Co., Ltd., Shenzhen, Guangdong 518129 (CN)
(72) Inventor: YANG, Xiaopan, Shenzhen, Guangdong 518129 (CN); GAO, Xiang, Shenzhen, Guangdong 518129 (CN); XU, Shaofeng, Shenzhen, Guangdong 518129 (CN); LIU, Yiting, Shenzhen, Guangdong 518129 (CN)
(74) Representative: Gill Jennings & Every LLP
(86) International application number: PCT/CN2022/094568
(87) International publication number: WO 2022/253036

(57) **Abstract**

This application provides an antenna unit, a radar, and a terminal device. The antenna unit includes a first feed unit, a first array element, a first dummy, and a first switch component. The first feed unit is configured to transmit an electrical signal. The first array element is configured to radiate or receive a signal. The first array element is connected to a first end of the first feed unit. The first switch component is connected between the first dummy and the first end of the first feed unit, and is configured to control a status of a connection of the first dummy to the first feed unit. The antenna unit provided in this application can reconfigure a plurality of forms of beams and reduce a quantity of occupied pins of a chip to save room for wiring. When the antenna unit is applied to a radar in a smart terminal, for example, for a smart home, smart manufacturing, or smart transportation, a capability of the smart terminal for monitoring and coping with a complex scenario is improved.

## Description

This application claims priority to Chinese Patent Application No. 202110603601.1, filed with the China National Intellectual Property Administration on May 31, 2021 and entitled "ANTENNA UNIT, RADAR, AND TERMINAL DEVICE", which is incorporated herein by reference in its entirety.

### TECHNICAL FIELD

This application relates to the field of antenna technologies, and in particular, to an antenna unit, a radar, and a terminal device.

### BACKGROUND

Scenarios of functions of an autonomous driving technology have been changing from simple function assistance to fully driverless, and accordingly, there have been more configuration solutions and types and a higher quantity of millimeter-wave radars. Therefore, in terms of millimeter-wave antennas, there are both challenges and opportunities. On the one hand, in autonomous driving scenarios, there are high complexity with diversified functions and high requirements on resolution of a target, and an antenna system needs to satisfy a coverage requirement in a plurality of scenarios. On the other hand, autonomous driving requires a large quantity of radar sensors with distributed arrangement, resulting in high complexity of fusion, a heavy bus load, and high costs. Therefore, an antenna system needs to be developed for multimodal integration to reduce a quantity of radars, reduce complexity, and vehicle deployment costs.

At present, for application in a plurality of radar scenarios, a radar module that has a single beam form or two types of beams is mostly used for coverage. For example, in a first conventional technology, in a transmit antenna, medium-gain medium-range antennas with a wide beam are used on two channels, and a high-gain long-range antenna with a narrow beam is used on one channel; and in a receive antenna, medium-range antennas are used on two channels, and long-range antennas are used on other two channels, to satisfy a coverage requirement in medium- and long-range scenarios. In a short-range scenario, both transmit and receive antennas are short-range antennas for coverage in the short-range scenario. A disadvantage of this technology is that a specific radar module needs to be designed for each scenario to satisfy coverage requirements of a vehicle in a plurality of scenarios. A large quantity and many types of radar modules are required, resulting in high complexity of vehicle fusion. In a second conventional technology, a beam is adjusted by adjusting an amplitude and a phase of an antenna by closing a channel or by using a built-in switch in an MMIC (Monolithic Microwave Integrated Circuit, monolithic microwave integrated circuit) chip. For example, three antenna units are connected to pins of the chip through three active channels, and the chip has a built-in switch that can control opening and closing of the three active channels. For a short-range scenario, a wide beam can be implemented by opening one of the three active channels at the same time. For a long-range scenario, three active channels are opened at the same time to implement a high gain and a narrow beam. A disadvantage of the technology is that each antenna unit has to be connected to a chip through an active channel. Therefore, there are a large quantity of active channels. The active channel needs to be connected to the chip via a pin of the chip. As a result, a large quantity of pins of the chip is occupied, increasing a quantity of chips, and requiring larger room for wiring near the chip.

### SUMMARY

This application provides an antenna unit, a radar, and a terminal device. The antenna unit can reconfigure a plurality of forms of beams and reduce a quantity of occupied pins of a chip to save room for wiring.

According to a first aspect, this application provides an antenna unit. The antenna unit includes a first feed unit, a first array element, a first dummy, and a first switch component. The first feed unit is configured to transmit an electrical signal. The first array element is configured to radiate or receive a signal. The first array element is connected to a first end of the first feed unit. The first switch component is connected between the first dummy and the first end of the first feed unit, and is configured to control a status of a connection of the first dummy to the first feed unit.

In the antenna unit provided in this application, on the one hand, the first dummy and the first feed unit are electrically connected via the first switch component, so that two types of antennas can be reconfigured, thereby generating two forms of beams. On the other hand, the first array element and the first dummy are electrically connected to a chip via the first feed unit, so that the first feed unit needs to occupy only one pin of the chip. Compared with a conventional technology, a quantity of occupied pins of the chip can be reduced to save room for wiring.

The first array element is a radiating structure directly connected to the first feed unit, and is configured to radiate or receive a signal. When not connected to the first feed unit, the first dummy is configured to suppress or guide a surface wave of the antenna unit and improve radiation pattern consistency of the antenna unit. In this application, the first dummy is connected to the first feed unit via the first switch component, to form a radiating structure connected to the first feed unit. Structures of the first dummy and the first array element may be the same or different.

In some implementations, when the first switch component is on, the first array element and the first feed unit form a first antenna. When the first antenna transmits a signal, a signal current is directly transmitted from the first feed unit to the first array element, and is radiated to an external space via the first array element. The first antenna has a small aperture, and may transmit and receive a low-gain beam with a wide waveform that may be used as a short-range beam; or when the first switch component is off, the first array element, the first dummy, and the first feed unit form a second antenna. Compared with the first antenna, the second antenna has a larger aperture, and may transmit and receive a high-gain beam with a narrow waveform that may be used as a medium-range beam.

In some implementations, structures of the first dummy and the first array element are the same, the first array element and the first dummy are arranged along a first direction, array element branches are disposed on two sides of the first array element along the first direction, and dummy branches are disposed on two sides of the first dummy along the first direction. A quantity of array element branches and a quantity of dummy branches are not limited, and may be specifically set based on a requirement.

In some implementations, a width of an array element branch located in the middle of the first array element is greater than a width of an array element branch located at either end of the first array element, and a width of a dummy branch located in the middle of the first dummy is greater than a width of a dummy branch located at either end of the first dummy. This design is advantageous for forming a beam with a low side lobe.

In some implementations, the first array element may be disposed at an included angle to the first dummy, and the included angle is less than 90°.

In some implementations, the first dummy, the first array element, and the first feed unit in the antenna unit are metal graphics.

In a possible implementation, the antenna unit includes a plurality of first dummies and a plurality of first switch components, and each of the first dummies is connected to the first end of the first feed unit via one of the first switch components; and/or
the antenna unit includes a plurality of first array elements, and each of the first array elements is connected to the first end of the first feed unit.

In some implementations, there are two first dummies, and there are two first switch components. Each of the first switch components is separately connected between the first dummy and the first end of the first feed unit, and the first switch component is configured to control a status of a connection of the first dummy to the first end of the first feed unit.

In some implementations, the antenna unit may form four types of antennas. When the two first switch components are on, the first array element and the first feed unit form a first antenna. In this case, the two first dummies may be configured to suppress a surface wave of the first antenna and improve radiation pattern consistency. When one of the first switch components is off and the other first switch component is on, one of the first dummies, the first array element, and the first feed unit form a second antenna. When one of the first switch components is on and the other first switch component is off, the other first dummy, the first array element, and the first feed unit form a third antenna. When the two first switch components are off, the first array element, the two first dummies, and the first feed unit form a fourth antenna, and the fourth antenna has a largest transmit or receive aperture, is an antenna with a highest gain, may transmit and receive a high-gain beam with a narrow waveform, and may be used to generate a long-range beam. The first antenna has a smallest transmit or receive aperture, is an antenna with a lowest gain, may transmit and receive a low-gain beam with a wide waveform, and may be used to generate a short-range beam. The second antenna and the third antenna may be used to generate a medium-range beam.

In a possible implementation, the antenna unit includes four first dummies and four first switch components. Each of the first switch components is separately connected between the first dummy and the first end of the first feed unit, and the first switch component is configured to control the status of the connection of the first dummy to the first end of the first feed unit.

In one reconfiguration solution, when all the four first switch components are on, the first array element and the first feed unit form a first antenna. The first antenna is a low-gain antenna, and may transmit and receive a low-gain beam with a wide waveform that may be used as a short-range beam, and the four first dummies are configured to suppress a surface wave and improve radiation pattern consistency; or when two of the first switch components are off and the other two first switch components are on, the first array element, two of the first dummies, and the first feed unit form a fourth antenna. The fourth antenna has a larger aperture, is a high-gain antenna, and may transmit and receive a high-gain beam with a narrow waveform that may be used as a medium-range beam; or when all the four first switch components are off, the first array element, the four first dummies, and the first feed unit form a seventh antenna. The seventh antenna has a larger aperture, is an antenna with a higher gain, and may transmit and receive a beam with a higher gain and a narrower waveform that may be used as a long-range beam. The reconfiguration solution may be used for monitoring a condition in front of a vehicle and coping with different scenarios in front of the vehicle with a shift among three types of beams.

In a possible implementation, the antenna unit further includes a power splitter. The power splitter includes a first power splitter subpart and a second power splitter subpart that have different structural parameters.

The first power splitter subpart is connected between the first dummy and the first end of the first feed unit, and the second power splitter subpart is connected between the first array element and the first end of the first feed unit;
the antenna unit includes at least two first array elements, each of the first array elements is connected to the first end of the first feed unit, the first power splitter subpart is connected between one of the first array elements and the first end of the first feed unit, and the second power splitter subpart is connected between another first array element and the first end of the first feed unit; or
the antenna unit includes at least two first dummies, each of the first dummies is connected to the first end of the first feed unit, the first power splitter subpart is connected between one of the first dummies and the first end of the first feed unit, and the second power splitter subpart is connected between another first dummy and the first end of the first feed unit.

In some implementations, shapes of the first power splitter subpart and the second power splitter subpart each are one of a spiral shape, a loopy shape, or an "L" shape.

In some implementations, the first power splitter subpart is disposed between the first switch component and the first end of the first feed unit. In some implementations, the first power splitter subpart is disposed between the first dummy and the first switch component.

In some implementations, when there can be two or more first dummies, the first power splitter subpart may be disposed between each of the first dummies and the first end of the first feed unit; or when there can be two or more first array elements, the second power splitter subpart may be disposed between each of the first array elements and the first end of the first feed unit, to set a shape of an output beam.

In some implementations, the first power splitter subpart and the second power splitter subpart may have a same structural parameter. In this case, the power splitter is configured to split a signal of the first feed unit into two signals and transmit the two signals to the first array element and the first dummy, without changing amplitudes and/or phases of the signals in the first array element and the first dummy.

In some implementations, there may be more first array elements and more first dummies, and there may be more first power splitter subparts and more second power splitter subparts that have a same structural parameter. In this case, the power splitter is configured to split a signal of the first feed unit into more signals and transmit the signals to the first array elements and the first dummies.

In some implementations, the antenna unit includes two first dummies, two first switch components, and two first power splitter subparts, and includes one first array element and one second power splitter subpart. Each of the first switch components is connected between the first dummy and the first end of the first feed unit. Each of the first power splitter subparts is connected between the first dummy and the first end of the first feed unit.

In some implementations, the second power splitter subpart is a part of a metal structure, of the first array element, adjacent to the first feed unit. In some implementations, the first power splitter subpart and the first power splitter subpart are metal structures each having a curved part, and structures of the first power splitter subpart and the first power splitter subpart are the same.

In some implementations, the antenna unit includes two first array elements and two second power splitter subparts, and each of the second power splitter subparts is connected between each of the first array elements and the first end of the first feed unit.

In a possible implementation, the structural parameters each include at least one of a length, a width, or a shape.

In a possible implementation, the antenna unit further includes a branching part, and the branching part is connected to a first end of the first dummy.

The first end of the first dummy is an end closer to the first feed unit. The branching part is configured to change a status of a tail end of the first dummy, to change a radiation characteristic of the first dummy. The radiation characteristic of the first dummy is an amplitude-phase characteristic of a signal in the first dummy, and the amplitude-phase characteristic of the signal include an amplitude and a phase of the signal.

In some implementations, when the first switch component is in an on state, the first array element and the first feed unit form a first antenna. In this case, because the first end of the first dummy is connected to the branching part, a structural form of the first dummy changes. After a signal in the first array element is coupled to the first dummy with a changed status, a signal in the first dummy with a changed status changes. When a changed signal is coupled to the signal in the first array element, a beam form of the signal in the first array element is changed. In some implementations, a beam with a tilt angle may be generated. In some implementations, when the first switch component is in an off state, because of the branching part, beam forms of signals simultaneously generated by the first dummy and the first array element also change. A shape of the branching part may be set based on an actual requirement. In some implementations, the shape of the branching part includes one of a spiral shape, a loopy shape, an L-shape, or a disc shape. In some implementations, the branching part may alternatively be a microstrip. A size of the branching part may be set based on an actual requirement. For example, the branching part may be half a medium wavelength, and the branching part may be half a medium wavelength. The "medium" in the medium wavelength is a medium on a substrate, and the medium wavelength is a wavelength of an electromagnetic wave through the medium on the substrate. In other words, a length of the branching part is related to a property of the medium.

In a possible implementation, the antenna unit further includes a second switch component. The second switch component is located between the branching part and the first end of the first dummy, and the branching part is connected to the first end of the first dummy via the second switch component.

The second switch component is configured to control a status of a connection of the first dummy to the branching part. In some implementations, the second switch component is used to control the status of the connection of the branching part to the first dummy, so that the antenna unit can form more antennas. In some implementations, when both the first switch component and the second switch component are in an on state, the first array element and the first feed unit form a first antenna; when the first switch component is in an on state and the second switch component is in an off state, the first array element and the first feed unit form a first antenna, where the first dummy and the branching part change the beam form of the signal in the first array element; or when the first switch component is in an off state and the second switch component is in an on state, the first array element, the first dummy, and the first feed unit form a second antenna.

In a possible implementation, the antenna unit includes a plurality of first dummies, a plurality of second switch components, and a plurality of branching parts. One branching part is disposed at the first end of each of the first dummies, and the branching part is connected to the first end of the first dummy via one of the second switch components. In some implementations, there are two first dummies, two second switch components, and two branching parts. One of the branching parts is connected to the first end of one of the first dummies via one of the second switch components, and the other branching part is connected to the first end of the other first dummy via the other second switch component. The two branching parts each are configured to change a radiation characteristic of the two first dummies.

In some implementations, the two first dummies and the first array element have a same structure, and the two branching parts each are configured to increase a length of each of the two first dummies. When the two first switch components are disconnected and the two second switch components are off, the signal of the first feed unit is directly transmitted to the first array element, a signal of the first array element is coupled to the two first dummies, and the signal is radiated after being transmitted to the two first dummies. After the two second switch components are off, statuses of the first ends of the two first dummies change. As the statuses of the first ends change, amplitudes and phases of signals in the two first dummies may be changed. In this case, a bimodal waveform is generated when the signals with changed amplitudes and phases in the two first dummies are coupled to the signal in the first array element, and a bimodal waveform is generated after the change of the statuses of the first ends of the two first dummies.

When the two first switch components and the two second switch components are both in an on state, a beam generated by an antenna including the first array element and the first feed unit is a low-gain unimodal beam with a wide waveform; when two first switch components are in an on state and the two second switch components are in an off state, an antenna including the first array element and the first feed unit generates a bimodal beam, where because the first ends of the two first dummies are connected to the two branching parts, a beam form changes, a bimodal waveform is generated, and an included angle between two peaks may be set by adjusting a structure of the two first dummies or the two branching parts, where a beam with the bimodal waveform may be used for simultaneously monitoring two corners in front of a vehicle or two corners behind the vehicle, and may further be applied to a roadside radar system; or when two first switch components are in an off state and the two second switch components are in an on state, a beam generated by an antenna including the first array element, the two first dummies, and the first feed unit is a high-gain unimodal narrow pencil beam with a narrow waveform.

In another implementation, there may be two or more first dummies and two or more branching parts, and a shape and a size of each of the branching parts may be set based on an actual condition.

In a possible implementation, the antenna unit further includes a ground plane, and one end, of the branching part, farther away from the first dummy is connected to the ground plane.

In a possible implementation, the antenna unit further includes a second array element, a second feed unit, and a fourth switch component. The second array element is configured to radiate or receive a signal, the second feed unit is configured to transmit an electrical signal, the second array element is connected to a first end of the second feed unit, and the fourth switch component is connected between the first dummy and the first end of the second feed unit, and is configured to control a status of a connection of the first dummy to the second feed unit.

When the fourth switch component is in an on state, the first dummy is disconnected from the second feed unit; or when the fourth switch component is in an off state, the first dummy is connected to the second feed unit. The second array element is an array element connected to the second feed unit.

Structures of the second feed unit and the first feed unit may be the same or different, and may be formed by metal graphics. The first dummy is connected to the first feed unit and the second feed unit, so that signals in the first feed unit and the second feed unit can be simultaneously radiated, with simultaneous excitation, after being overlapped in the first dummy. On the one hand, a longer and narrower long-range pencil beam can be reconfigured. On the other hand, an arrangement spacing may be reduced. The arrangement spacing is a spacing between the first feed unit and the second feed unit. As an angular position at which a grating lobe appears is increased, an angle measurement unambiguous range becomes larger. The grating lobe is a wave crest that has a same level as a main lobe.

In some implementations, when the first switch component is off and the fourth switch component is on, a beam generated by an antenna including the first array element, the first dummy, and the first feed unit is a medium-range wide beam; when the first switch component is on and the fourth switch component is off, a beam generated by an antenna including the second array element, the first dummy, and the second feed unit is a medium-range wide beam; or when the first switch component is off and the fourth switch component is off, a beam generated by an antenna including the first array element, the second array element, the first dummy, the first feed unit, and the second feed unit is a long-range narrow beam.

In a possible implementation, there may be two or more first dummies, and the antenna unit further includes a second dummy. The second dummy is connected to the first end of the second feed unit via a fifth switch component, and the fifth switch component is configured to control a status of a connection of the second dummy to the first end of the second feed unit. In some implementations, there may be one, two, or more second dummies. This may be specifically set based on an actual requirement. The second dummy is a dummy connected to the second feed unit.

In some implementations, the antenna unit includes two first array elements and two second array elements. The two first array elements are electrically connected to the first feed unit, and the two second array elements are electrically connected to the second feed unit. When the first switch component is off and the fourth switch component is on, the two first array elements, the first dummy, and the first feed unit form a ninth antenna, and a beam generated by the ninth antenna is a medium-range high-gain wide beam with a wide waveform; when the first switch component is on and the fourth switch component is off, the two second array elements, the first dummy, and the second feed unit form a tenth antenna, and a beam generated by the tenth antenna is a medium-range high-gain wide beam with a wide waveform; or when the first switch component is off and the fourth switch component is off, the two first array elements, the two second array elements, the first dummy, the first feed unit, and the second feed unit form an eleventh antenna, and a beam generated by the eleventh antenna is a long-range narrow beam with a higher gain and a wider waveform.

In the foregoing implementations, two feed units, namely, the first feed unit and the second feed unit, are included. In another implementation, more feed units, more array elements, and more dummies may further be included. This may be specifically set based on an actual requirement. As long as one of the dummies is connected to at least two feed units, simultaneous excitation may be implemented, to generate a long-range narrow beam with a higher gain and a wider waveform, and an arrangement spacing may further be reduced. The arrangement spacing is a spacing between the first feed unit and the second feed unit. As an angular position at which a grating lobe appears is increased, an angle measurement unambiguous range becomes larger.

In a possible implementation, the antenna unit includes a plurality of antenna array element groups, the first feed unit, the first array element, the first dummy, and the first switch component belong to a first antenna array element group in the plurality of antenna array element groups, and the plurality of antenna array element groups are arranged along a first direction.

A structure of another antenna array element group, other than the first antenna array element group, in the plurality of antenna array element groups may be completely the same as, partly the same as, or completely different from a structure of the first antenna array element group.

In some implementations, the plurality of antenna array elements may all be first antenna array element groups, and may be used to implement more forms of beams, for wider application. The first antenna array element group may alternatively include a plurality of first array elements, a plurality of first dummies, and a plurality of first switch components.

In some implementations, the plurality of antenna array element groups include a plurality of first antenna array element groups and a plurality of second antenna array element groups. The first antenna array element groups and the second antenna array element groups are disposed apart. Different from the first antenna array element groups, the second antenna array elements each include two first dummies.

In some implementations, the plurality of antenna array elements include a plurality of first antenna array element groups and a plurality of third antenna array element groups. The first antenna array element groups and the third antenna array element groups are disposed apart. Different from the first antenna array element groups, the third antenna array element groups each include two first dummies and a power splitter. The power splitter includes a first power splitter subpart and a second power splitter subpart that have different structural parameters. The first power splitter subpart and the second power splitter subpart are separately disposed between the two first dummies and the first end of the first feed unit.

In some implementations, the antenna array element group may include more parts, and may further include a branching part. This may be specifically set based on an actual requirement.

In a possible implementation, the first switch component includes at least one of a diode switch, a photosensitive switch, or an adjustable impedance component.

In a possible implementation, the antenna unit further includes a switch component control unit. The switch component control unit is configured to control on and off of the first switch component.

In another implementation, the switch component control unit may further control on and off of the second switch component, a third switch component, a fourth switch component, and a fifth switch component. In some implementations, when the first switch component, the second switch component, the third switch component, the fourth switch component, and the fifth switch component are diode switches, the switch component control unit is disposed in a chip, may be a logic control circuit in the chip, and is configured to control on and off of the diode switches. In some implementations, when the first switch component, the second switch component, the third switch component, the fourth switch component, and the fifth switch component are photosensitive switches, the switch component control unit may be an independent structural component disposed on a substrate, and is configured to control on and off of the photosensitive switches.

In a possible implementation, the antenna unit further includes a substrate and a chip disposed on one side of the substrate, and a second end of the first feed unit is electrically connected to the chip.

According to a second aspect, this application provides a radar. The radar includes a housing and the antenna unit according to any one of the foregoing implementations that is located in the housing.

In some implementations, the radar further includes a circuit board. The substrate in the antenna unit may be a substrate in the circuit board, and an electronic component in the circuit board and a chip are disposed on the substrate. In some implementations, a plurality of different antenna units, including at least two antenna units described above, may be disposed on a same circuit board, to generate different forms of beams. The circuit board may be an MMIC.

In a possible implementation, the radar further includes a signal processing apparatus. The signal processing apparatus is electrically connected to the first feed unit. The signal processing apparatus is configured to process a signal and transmit the signal to the antenna unit for transmission, or the antenna unit transmits a received signal to the signal processing apparatus for processing. The signal processing apparatus may be a mobile data center (Mobile Data Center, MDC).

According to a third aspect, this application provides a terminal device. The terminal device includes a main part of the device, a control system, and the radar as described above that is located in the main part of the device. The radar is connected to the control system, and the control system obtains information outside the terminal device by using the radar.

In a possible implementation, the terminal device includes a smart home, a smart manufacturing device, or a smart transportation device. The smart home includes a sweeping robot, the smart manufacturing device includes an industrial robot, and the smart transportation device includes a vehicle, an unmanned aerial vehicle, a yacht, and the like. One or more radars may be disposed, and a plurality of types of antenna units may be disposed in a same radar. When the terminal device is a vehicle, a plurality of different antenna units may be disposed in a radar, or a plurality of radars may be disposed.

According to a fourth aspect, this application provides a roadside radar system. The roadside radar system is installed at a crossroad or a bend. The roadside radar system includes an installation component and the radar according to the foregoing implementations that is mounted on the installation component.

The roadside radar system is used to monitor a condition at a crossroad or monitor a speed of a vehicle at a junction. An antenna unit that can generate a bimodal beam is disposed in the radar, and the antenna unit may simultaneously generate bimodal beams for monitoring a junction and another junction. In another implementation, an antenna unit that can generate a trimodal beam may alternatively be disposed. In some implementations, an antenna unit that can generate a short-range wide beam, a medium-range wide beam, and a long-range narrow beam may alternatively be disposed for monitoring a condition or a speed of a vehicle within different distances and ranges. In some implementations, the roadside radar system is a 24 GHz roadside radar system, and the 24 GHz roadside radar system is a roadside radar system that senses existence, a motion speed, a static distance, an angle, and the like of an object by transmitting or receiving a microwave at around 24.125 GHz.

In the roadside radar system in this application, a corresponding radar may be disposed based on a position and a form of a roadside or a junction, to better monitor different scenarios.

### BRIEF DESCRIPTION OF DRAWINGS

To describe technical solutions in embodiments of this application more clearly, the following describes the accompanying drawings used in embodiments of this application.
FIG. 1 is a schematic diagram of a structure of an antenna unit according to an implementation of this application;
FIG. 2a is a schematic diagram of a structure of an antenna unit according to an implementation of this application;
FIG. 2b is a schematic diagram of a beam generated by an antenna unit according to an implementation of this application;
FIG. 3 is a schematic diagram of a structure of an antenna in a conventional technology;
FIG. 4 is a sectional view of an antenna unit according to an implementation of this application;
FIG. 5 is a schematic diagram of a structure of an antenna unit according to an implementation of this application;
FIG. 6 is a schematic diagram of a structure of an antenna unit according to an implementation of this application;
FIG. 7 is a schematic diagram of a beam generated by an antenna unit according to an implementation of this application;
FIG. 8 is a schematic diagram of a structure of an antenna unit according to an implementation of this application;
FIG. 9 is a schematic diagram of a structure of an antenna unit according to an implementation of this application;
FIG. 10 is a schematic diagram of a structure of an antenna unit according to an implementation of this application;
FIG. 11 is a horizontal radiation pattern of a beam generated by an antenna unit according to an implementation of this application;
FIG. 12 is a horizontal radiation pattern of a beam generated by an antenna unit according to an implementation of this application;
FIG. 13a is a schematic diagram of a structure of an antenna unit according to an implementation of this application;
FIG. 13b is a schematic diagram of a structure of an antenna unit according to an implementation of this application;
FIG. 14 is a schematic diagram of a structure of a first power splitter subpart or a second power splitter subpart in an antenna unit according to an implementation of this application;
FIG. 15 is a schematic diagram of a structure of an antenna unit according to an implementation of this application;
FIG. 16 is a schematic diagram of a beam generated by an antenna unit according to an implementation of this application;
FIG. 17 is a schematic diagram of a structure of an antenna unit according to an implementation of this application;
FIG. 18 is a horizontal radiation pattern of a beam generated by an antenna unit according to an implementation of this application;
FIG. 19 is a horizontal radiation pattern of a beam generated by an antenna unit according to an implementation of this application;
FIG. 20 is a schematic diagram of a structure of an antenna unit according to an implementation of this application;
FIG. 21 is a schematic diagram of a structure of an antenna unit according to an implementation of this application;
FIG. 22 is a schematic diagram of a structure of an antenna unit according to an implementation of this application;
FIG. 23 is a schematic diagram of a structure of an antenna unit according to an implementation of this application;
FIG. 24 is a schematic diagram of a structure of a branching part of an antenna unit according to an implementation of this application;
FIG. 25 is a schematic diagram of a structure of an antenna unit according to an implementation of this application;
FIG. 26 is a schematic diagram of a structure of an antenna unit according to an implementation of this application;
FIG. 27 is a schematic diagram of a beam generated by an antenna unit according to an implementation of this application;
FIG. 28 is a sectional view of an antenna unit according to an implementation of this application;
FIG. 29 is a sectional view of an antenna unit according to an implementation of this application;
FIG. 30 is a horizontal radiation pattern of a beam generated by an antenna unit according to an implementation of this application;
FIG. 31 is a horizontal radiation pattern of a beam generated by an antenna unit according to an implementation of this application;
FIG. 32 is a schematic diagram of a structure of an antenna unit according to an implementation of this application;
FIG. 33 is a schematic diagram of a beam generated by an antenna unit according to an implementation of this application;
FIG. 34 is a schematic diagram of a structure of an antenna unit according to an implementation of this application;
FIG. 35 is a schematic diagram of a structure of an antenna unit according to an implementation of this application;
FIG. 36 is a horizontal radiation pattern of a beam generated by an antenna unit according to an implementation of this application;
FIG. 37 is a horizontal radiation pattern of a beam generated by an antenna unit according to an implementation of this application;
FIG. 38 is a horizontal radiation pattern of a beam generated by an antenna unit according to an implementation of this application;
FIG. 39 is a schematic diagram of a structure of an antenna unit according to an implementation of this application;
FIG. 40 is a schematic diagram of a structure of an antenna unit according to an implementation of this application;
FIG. 41 is a diagram showing comparison between antenna units in FIG. 39 and FIG. 40;
FIG. 42 is a schematic diagram of a structure of an antenna unit according to an implementation of this application;
FIG. 43 is a schematic diagram of a structure of an antenna unit according to an implementation of this application;
FIG. 44 is a schematic diagram of a structure of an antenna unit according to an implementation of this application;
FIG. 45 is a schematic diagram of a structure of an antenna unit according to an implementation of this application;
FIG. 46 is a schematic diagram of a structure of a radar according to an implementation of this application;
FIG. 47 is a schematic diagram of a structure of a terminal device according to an implementation of this application; and
FIG. 48 is a schematic diagram of a structure of a roadside radar system according to an implementation of this application.

### DESCRIPTION OF EMBODIMENTS

Technical solutions of embodiments of this application are described below with reference to the accompanying drawings in embodiments of this application. Clearly, the described embodiments are merely some of rather than all embodiments of this application.

In this specification, the terms "first", "second", and the like are merely intended for a purpose of description, and shall not be understood as an indication or implication of relative importance or an implicit indication of a quantity of indicated technical features. Therefore, a feature limited by using "first " or "second" may explicitly indicate or implicitly include one or more such features. In the descriptions of this application, unless otherwise stated, "a plurality of" means two or more than two.

In addition, in this specification, orientation terms such as "up" and "down" are defined relative to orientations in which structures are schematically placed in the accompanying drawings. It should be understood that these orientation terms are relative concepts used for relative description and clarification, and may change correspondingly based on a change of an orientation in which a structure is placed.

For ease of understanding, English abbreviations and related technical terms used in embodiments of this application are first explained and described below.

Array element: An array element is a radiating structure directly connected to a feed unit, and is configured to radiate or receive a signal.

Dummy: When not connected to a feed unit, a dummy is configured to suppress or guide a surface wave of an antenna unit and improve radiation pattern consistency of the antenna unit. In this application, the dummy is connected to the feed unit via a switch component, and when the switch component is off, a radiating structure connected to the feed unit may be formed.

MMIC: Monolithic microwave integrated circuit, monolithic microwave integrated circuit.

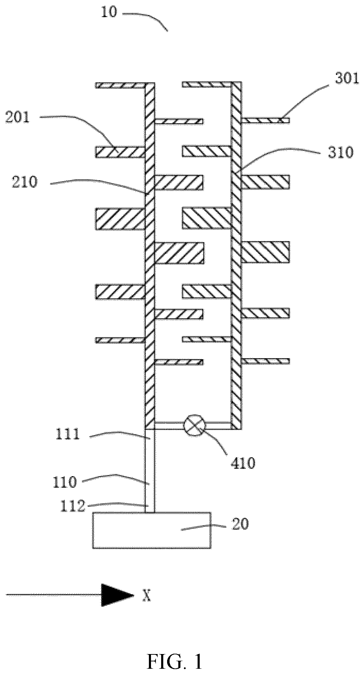

Refer to FIG. 1. An embodiment of this application provides an antenna unit 10. The antenna unit 10 includes a first feed unit 110, a first array element 210, a first dummy 310, and a first switch component 410. The first feed unit 110 is configured to transmit an electrical signal, the first array element 210 is configured to radiate or receive a signal, the first array element 210 is connected to a first end 111 of the first feed unit 110, and the first switch component 410 is connected between the first dummy 310 and the first end 111 of the first feed unit 110, and is configured to control a status of a connection of the first dummy 310 to the first feed unit 210.

It should be noted that, in FIG. 1, an example in which the antenna unit 10 includes the first array element 210 and the first dummy 110 is used for description. In actual application, quantities of array elements and dummies are not limited and are subject to a specific scenario and product design.

When the first switch component 410 is in an on state, the first dummy 310 is disconnected from the first feed unit 110; or when the first switch component 410 is in an off state, the first dummy 310 is connected to the first feed unit 110, and can radiate or receive a signal. A second end 112 of the first feed unit 110 is connected to a chip 20. When the antenna unit 10 transmits a signal, a target signal is output from the chip 20. The electrical signal output by the chip 20 is transmitted to the first array element 210 and/or the first dummy 310 via the first feed unit 110, and is radiated from the first array element 210 and/or the first dummy 310 as a signal; and when the antenna unit 10 receives a signal, the first array element 210 and/or the first dummy 310 receive/receives a signal from outside, converts the signal into an electrical signal, and transmits the electrical signal to the chip 20 from the first feed unit 110.

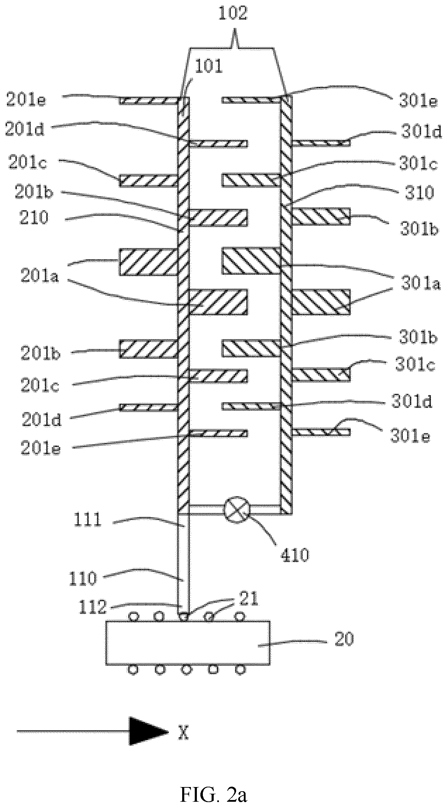

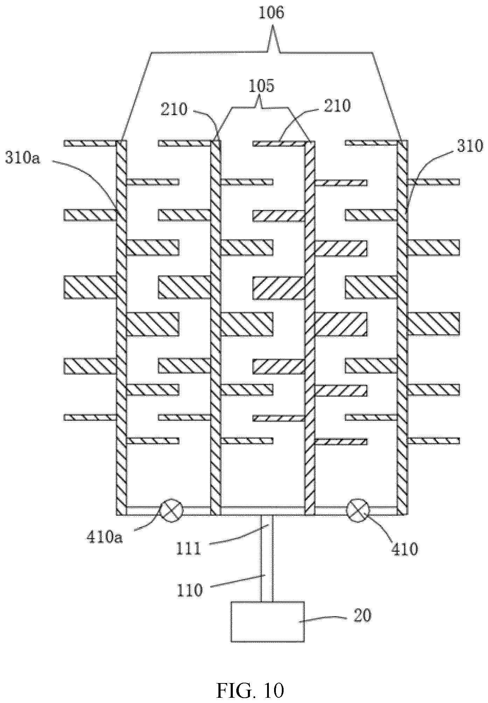

The first array element 210 is a radiating structure directly connected to the first feed unit 110, and is configured to radiate or receive a signal. When not connected to the first feed unit 110, the first dummy 310 is configured to suppress or guide a surface wave of the antenna unit 10 and improve radiation pattern consistency of the antenna unit 10. In this application, the first dummy 310 is connected to the first feed unit 110 via the first switch component 410, to form the radiating structure connected to the first feed unit 110. Structures of the first dummy 310 and the first array element 210 may be the same or different. In a design shown in FIG. 1, the structures are the same. When the structures of the first dummy 310 and the first array element 210 are the same, and the first switch component 410 is in an off state, the first dummy 310 and the first array element 210 have a same function and are equivalent to each other. In this implementation, the structures of the first dummy 310 and the first array element 210 are the same. The first array element 210 and the first dummy 310 are arranged along a first direction X. Array element branches 201 are disposed on two sides of the first array element 210 along the first direction X, and dummy branches 301 are disposed on two sides of the first dummy 310 along the first direction X. There are 10 array element branches 201 and 10 dummy branches 301. A width of an array element branch 201 located in the middle of the first array element 210 is greater than a width of an array element branch 201 located at either end of the first array element 210, and a width of a dummy branch 301 located in the middle of the first dummy 310 is greater than a width of a dummy branch 301 located at either end of the first dummy 310. This design is advantageous for forming a beam with a low side lobe. For example, in a structure shown in FIG. 2a, 10 dummy branches 301 and 10 array element branches 201 are included. Two dummy branches 301a located in a middlemost part of the first dummy 310 have a same and a largest width, and a width of a dummy branch 301 between the two dummy branches 301a and an end part of the first dummy 310 gradually decreases from an end closer to the dummy branches 301a to an end farther away from the dummy branches 301a, or a width of a dummy branch 301 between the two dummy branches 301a and an end part of the first dummy 310 gradually decreases from an end closer to the dummy branches 301a to the end part of the first dummy 310. Specifically, a width of the dummy branches 301a>a width of dummy branches 301b>a width of dummy branches 301c>a width of dummy branches 301d>a width of dummy branches 301e. In some implementations, the width of the dummy branches 301a, the width of the dummy branches 301b, the width of the dummy branches 301c, the width of the dummy branches 301d, and the width of the dummy branches 301e decrease progressively on a regular basis. A regularity of a width decrease may be set based on an actual requirement. For example, the widths decrease in an arithmetic progression.

In some implementations, the width of the dummy branches 301a, the width of the dummy branches 301b, the width of the dummy branches 301c, the width of the dummy branches 301d, and the width of the dummy branches 301e may not decrease on a regular basis, and may be specifically set based on an actual requirement.

Two array element branches 201a located in a middlemost part of the first array element 310 have a same and a largest width, and a width of an array element branch 201 between the two array element branches 201a and an end part of the first array element 210 gradually decreases from an end closer to the array element branches 201a to an end farther away from the array element branches 201a. Specifically, a width of the array element branches 201a>a width of array element branches 201b>a width of array element branches 201c>a width of array element branches 201d>a width of array element branches 201e. In some implementations, the width of the array element branches 201a, the width of the array element branches 201b, the width of the array element branches 201c, the width of the array element branches 201d, and the width of the array element branches 201e decrease progressively on a regular basis. A regularity of a width decrease may be set based on an actual requirement. For example, the widths decreases in an arithmetic progression. In some implementations, the width of the array element branches 201a, the width of the array element branches 201b, the width of the array element branches 201c, the width of the array element branches 201d, and the width of the array element branches 201e may not decrease on a regular basis, and may be specifically set based on an actual requirement.

It should be noted that, when the dummy branches 301 and the array element branches 201 each are of another quantity, widths of the dummy branches 301 and widths of the array element branches 201 may be set on a regular basis, or may be set based on an actual requirement.

In some implementations, the first array element 210 may be disposed at an included angle to the first dummy 310, and the included angle is less than 90°. In another implementation, structural shapes of the first array element 210 and the first dummy 310 may alternatively be other shapes, and quantities of array element branches 201 and the dummy branches 301 may alternatively be other values. The first dummy 310, the first array element 210, and the first feed unit 110 in the antenna unit 10 are metal graphics, and shapes and sizes of the metal graphics may be set based on an actual requirement.

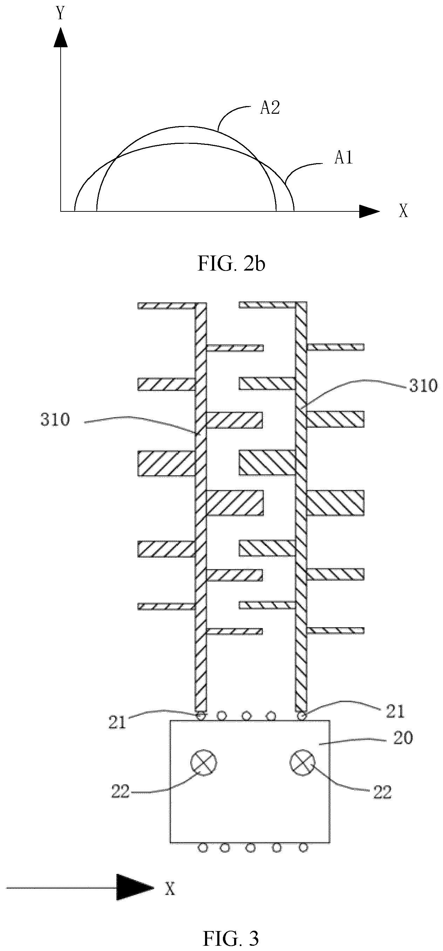

In this implementation, the antenna unit 10 may form two types of antennas. Refer to FIG. 2a. When the first switch component 410 is on, the first array element 210 and the first feed unit 110 form a first antenna 101. When the first antenna 101 transmits a signal, a signal current is directly transmitted from the first feed unit 110 to the first array element 210, and is radiated to an external space via the first array element 210. The first antenna 101 has a small aperture, and may transmit and receive a low-gain beam with a wide waveform (for example, a beam curve A1 in FIG. 2b) that may be used as a short-range beam; or when the first switch component 410 is off, the first array element 210, the first dummy 310, and the first feed unit 110 form a second antenna 102. Compared with the first antenna 101, the second antenna 102 has a larger aperture, and may transmit and receive a high-gain beam with a narrow waveform (for example, a beam curve A2 in FIG. 2b) that may be used as a medium-range beam.

A second end 112 of the first feed unit 110 is connected to the chip 20. Generally, a plurality of pins 21 (as shown in FIG. 2a) are included around the chip 20, and the pins 21 are configured to electrically connect the chip 20 to another electronic component. When the second antenna 102 is formed, the first array element 210 and the first dummy 310 are connected to the first end 111 of the first feed unit 110, and then are electrically connected to one of the pins 21 of the chip 20 via the first feed unit 110. That is, the antenna unit 10 needs only one pin 21 to be connected to the chip 20, and does not occupy a plurality of pins 21, so that the other pins of the chip 20 may be used for other purposes. In this implementation, only one first feed unit 110 needs to be disposed, thereby saving room near the chip 20 for wiring. Refer to FIG. 3. In an antenna 10 in a conventional technology, no first feed unit 110 is disposed, but two first dummies 310 are directly electrically connected to two pins 21 of a chip 20, and switch components 22 are disposed in the chip 20 to electrically connect the first dummies 310 to the chip 20. Two types of antennas are reconfigured with on and off states of the two switch components 22. In this solution, the two pins 21 of the chip 20 need to be occupied, and when the two first dummies 310 are metal graphics, the two pieces of metal graphics are separately connected to the two pins 21. As a result, more room around the chip 20 for wiring is occupied. In the solution in this application, fewer pins 21 are occupied, to save room for wiring.

By using the antenna unit 10 provided in this application, on the one hand, the first dummy 310 is electrically connected to the first feed unit 110 via the first switch component 410, to reconfigure two types of antennas, so that two forms of beams can be generated. On the other hand, the first array element 210 and the first dummy 310 are electrically connected to the chip 20 via the first feed unit 110, so that the first feed unit 110 needs to occupy only one pin 21 of the chip 20. Compared with the conventional technology, a quantity of occupied pins of the chip 20 can be reduced, to save room for wiring.

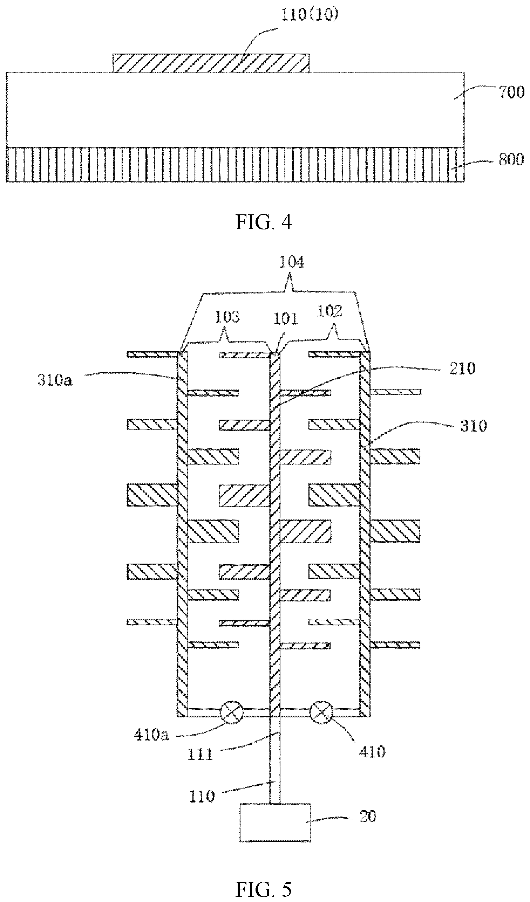

Refer to FIG. 4. In an implementation, the antenna unit 10 further includes a substrate 700. The first dummy 310, the first array element 210, the first feed unit 110, and the chip 20 are disposed on a surface of the substrate 700. The substrate 700 is used as a carrier of various elements in the antenna unit 10, and the substrate 700 may be a dielectric plate. Further, optionally, the antenna unit 10 further includes a ground plane 800, and the ground plane 800 is disposed on one side, of the substrate 700, farther away from the first array element 210. Specifically, the ground plane 800 may be a metal plate.

The first switch component 410 includes at least one of a diode switch, a photosensitive switch, or an adjustable impedance component. A second switch component 420, a third switch component 430, a fourth switch component 440, and a fifth switch component 450 in the following descriptions may each include at least one of a diode switch, a photosensitive switch, or an adjustable impedance component.

Refer to FIG. 5. In a possible implementation, the antenna unit 10 includes a plurality of first dummies 310 and a plurality of first switch components 410, and each of the first dummies 310 is connected to the first end 111 of the first feed unit 110 via one of the first switch components 410. There may be two or more first dummies 310, and there may be two or more first switch components 410. In an implementation shown in FIG. 5, there are two first dummies 310, and there are two first switch components 410. The two first dummies are denoted as 310 and 310a respectively, and the two first switch components are denoted as 410 and 410a respectively. The first switch component 410a is connected between the first dummy 310a and the first end 111 of the first feed unit 110, and the first switch component 410a is configured to control a status of a connection of the first dummy 310a to the first end 111 of the first feed unit 110. When the first switch component 410a is in an on state, the first dummy 310a is disconnected from the first feed unit 110; or when the first switch component 410a is in an off state, the first dummy 310a is connected to the first feed unit 110, and can radiate or receive a signal. In this implementation, the antenna unit 10 includes two first dummies and two first switch components, and can reconfigure more forms of beams.

In this implementation, structures of the first dummy 310, the first dummy 310a, and the first array element 210 are the same. In some implementations, the structures of the first dummy 310, the first dummy 310a, and the first array element 210 may be different. The antenna unit 10 in this implementation may form four types of antennas. When the first switch component 410 and the first switch component 410a are on, the first array element 210 and the first feed unit 110 form a first antenna 101. In this case, the first dummy 310 and the first dummy 310a may be configured to suppress a surface wave of the first antenna 101 and improve radiation pattern consistency; when the first switch component 410 is off and the first switch component 410a is on, the first dummy 310, the first array element 210 and the first feed unit 110 form a second antenna 102; when the first switch component 410 is on and the first switch component 410a is off, and the first dummy 310a, the first array element 210, and the first feed unit 110 form a third antenna 103; or when the first switch component 410 is off and the first switch component 410a is off, the first array element 210, the first dummy 310, the first dummy 310a, and the first feed unit 110 form a fourth antenna 104, where the fourth antenna 104 has a largest transmit or receive aperture, is an antenna with a highest gain, may transmit and receive a high-gain beam with a narrow waveform, and may be used to generate a long-range beam. The first antenna 101 has a smallest transmit or receive aperture, is an antenna with a lowest gain, may transmit and receive a low-gain beam with a wide waveform, and may be used to generate a short-range beam. The second antenna 102 and the third antenna 103 may be used to generate a medium-range beam.

In this implementation, the first dummy 310 and the first dummy 310a are located on two sides of the first array element 210. In some implementations, the first dummy 310 and the first dummy 310a may be located on a same side of the first array element 210.

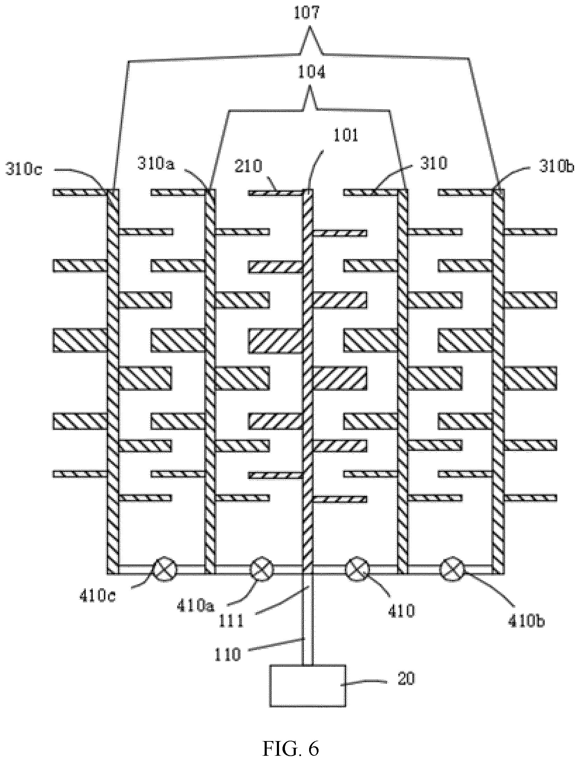

Refer to FIG. 6. Different from the implementation shown in FIG. 5, in a possible implementation, the antenna unit 10 includes four first dummies 310 and four first switch components 410. Specifically, the four first dummies are denoted as 310, 310a, 310b, and 310c respectively, and the four first switch components are denoted as 410, 410a, 410b, and 410c respectively. The first switch component 410b is connected between the first dummy 310b and the first end 111 of the first feed unit 110, and the first switch component 410c is connected between the first dummy 310c and the first end 111 of the first feed unit 110. When the first switch component 410b is in an on state, the first dummy 310b is disconnected from the first feed unit 110; or when the first switch component 410b is in an off state, the first dummy 310b is connected to the first feed unit 110, and can radiate or receive a signal. When the first switch component 410c is in an on state, the first dummy 310c is disconnected from the first feed unit 110; or when the first switch component 410c is in an off state, the first dummy 310c is connected to the first feed unit 110, and can radiate or receive a signal.

In this implementation, the first dummy 310b is located on one side, of the first dummy 310, farther away from the first array element 210, and the first dummy 310c is located on one side, of the first dummy 310a, farther away from the first array element 210. In another implementation, position relationships between the first dummy 310, the first dummy 310a, the first dummy 310b, the first dummy 310c, and the first array element 210 may be set in any manner, to implement different forms of beams. In this implementation, structures of the first dummy 310, the first dummy 310a, the first dummy 310b, the first dummy 310c, and the first array element 210 are the same. In some implementations, the structures of the first dummy 310, the first dummy 310a, the first dummy 310b, the first dummy 310c, and the first array element 210 may be different.

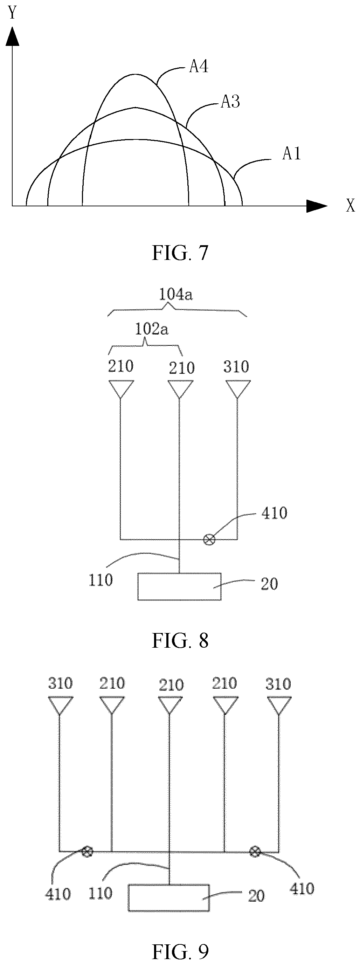

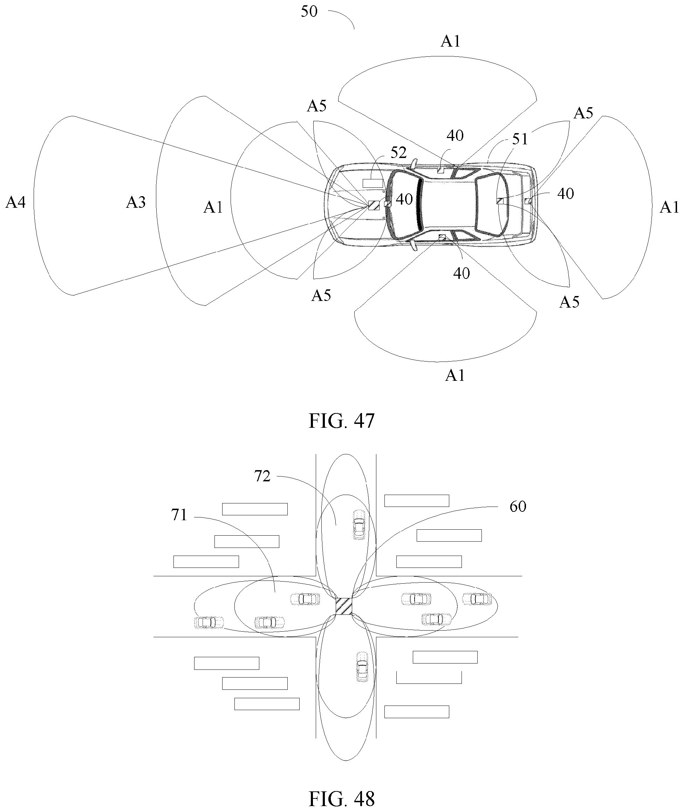

In one reconfiguration solution, when the first switch component 410, the first switch component 410a, the first switch component 410b, and the first switch component 410c are all on, the first array element 210 and the first feed unit 110 form a first antenna 101, where the first antenna 101 is a low-gain antenna, and may transmit and receive a low-gain beam with a wide waveform that may be used as a short-range beam (for example, a beam curve A1 in FIG. 7), and the first dummy 310, the first dummy 310a, the first dummy 310b, and the first dummy 310c are configured to suppress a surface wave and improve radiation pattern consistency; when the first switch component 410 and the first switch component 410a are off and the first switch component 410b and the first switch component 410c are on, the first array element 210, the first dummy 310, the first dummy 310a, and the first feed unit 110 form a fourth antenna 104, where the fourth antenna 104 has a larger aperture, is a high-gain antenna, and may transmit and receive a high-gain beam with a narrow waveform that may be used as a medium-range beam (for example, a beam curve A3 in FIG. 7); or when the first switch component 410, the first switch component 410a, the first switch component 410b, and the first switch component 410c are all off, the first array element 210, the first dummy 310, the first dummy 310a, the first dummy 310b, the first dummy 310c, and the first feed unit 110 form a seventh antenna 107, where the seventh antenna 107 has an even larger aperture, and is an antenna with a higher gain, and may transmit and receive a beam with a higher gain and a narrower waveform that may be used as a long-range beam (for example, a beam curve A4 in FIG. 7). This implementation may be used for monitoring a condition in front of a vehicle and coping with different scenarios (as shown in FIG. 47) in front of the vehicle with a shift among three types of beams.

The four dummies in this implementation can form more types of antennas, can radiate more types of beams of different shapes, and may be applied to more scenarios. In some implementations, the antenna unit 10 may further include more dummies or array elements, to obtain more forms of beams through reconfiguration, for wider application.

In the implementations shown in FIG. 5 and FIG. 6, there is one first array element 210. In some implementations, there may be a plurality of first array elements 210. That is, the plurality of first array elements 210 are directly connected to the first feed unit 110. In some implementations, when there are a plurality of first dummies 310, a quantity of first dummies 310 may be equal to, greater than, or less than a quantity of first array elements 210, and may be specifically set based on an actual requirement.

Refer to FIG. 8. In a possible implementation, the antenna unit 10 includes a plurality of first array elements 210, and each of the first array elements 210 is connected to the first end 111 of the first feed unit 110. There may be two or more first array elements 210. In the implementation shown in FIG. 8, there are two first array elements 210 and one first dummy 310, and the quantity of first dummies 310 is less than the quantity of first array elements 210. In the implementation shown in FIG. 8, two types of antennas may be formed. When the first switch component 410 is in an on state, the two first array elements 210 and the first feed unit 110 form a second antenna 102a; or when the first switch component 410 is in an off state, the two first array elements 210, the first dummy 310, and the first feed unit 110 form a fourth antenna 104a, where the fourth antenna 104a has an aperture for transmitting or receiving a signal larger than that of the second antenna 102a, and is a high-gain antenna, may transmit and receive a high-gain beam with a narrow waveform, and may be used to generate a medium-range beam. The second antenna 102a may be used to generate a short-range beam.

In another implementation, when the quantity of first array elements 210 is greater than the quantity of first dummies 310, there may be more first array elements 210 and more first dummies 310. As shown in FIG. 9, there are three first array elements 210, and there are two first dummies 310, so that more types of antennas may be formed.

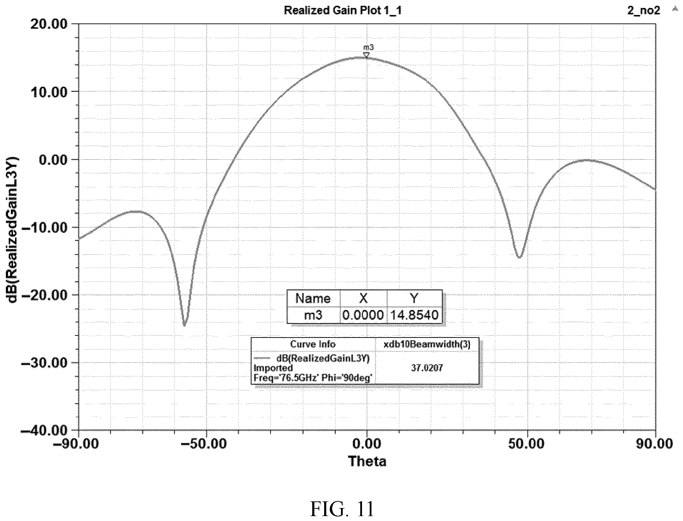

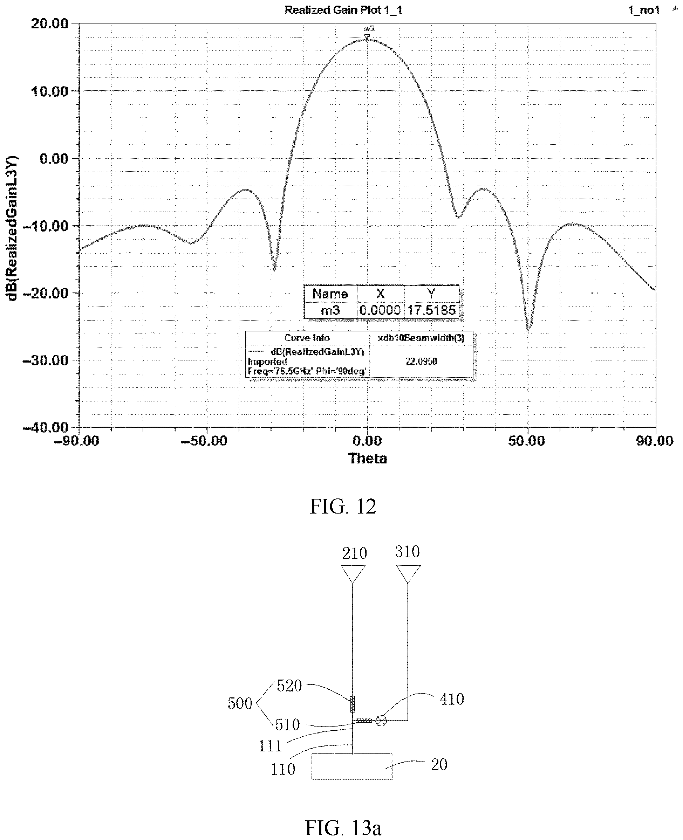

Refer to FIG. 10. In a possible implementation, the antenna unit 10 includes a plurality of first dummies 310, a plurality of first switch components 410, and a plurality of first array elements 210. Each of the first dummies 310 is connected to the first end 111 of the first feed unit 110 via one of the first switch components 410, and each of the first array elements 210 is connected to the first end 111 of the first feed unit 110. There may be two or more first dummies 310, two or more first switch components 410, and two or more first array elements 210. In the implementation shown in FIG. 10, there are two first array elements 210, and there are also two first dummies 310. When the first switch component 410 and the first switch component 410a are on, the two first array elements 210 and the first feed unit 110 form a fifth antenna 105, where a horizontal radiation pattern of the fifth antenna 105 for transmitting and receiving a signal is shown in FIG. 11, and a beam is a low-gain beam with a wide waveform that may be used as a short-range beam; or when both the first switch component 410 and the first switch component 410a are off, the two first array elements 210, the first dummy 310, the first dummy 310a, and the first feed unit 110 form a sixth antenna 106, where a horizontal radiation pattern of the sixth antenna 106 for transmitting and receiving a signal is shown in FIG. 12, and a beam is a high-gain beam with a narrow waveform that may be used as a long-range beam.

Refer to FIG. 13a. Different from the implementation shown in FIG. 1, in a possible implementation, the antenna unit 10 further includes a power splitter 500. The power splitter 500 includes a first power splitter subpart 510 and a second power splitter subpart 520 that have different structural parameters. The first power splitter subpart 510 is connected between the first dummy 310 and the first end 111 of the first feed unit 110, and the second power splitter subpart 520 is connected between the first dummy 310 and the first end 111 of the first feed unit 110. It should be noted that a figure of the first dummy 310 shown in FIG. 13a is a simplified figure, and a specific structure of the first dummy 310 may be the same as the structure of the first dummy 310 shown in FIG. 1, or may be another structural shape. A figure of the first array element 210 shown in FIG. 13a is a simplified figure, and a specific structure of the first array element 210 may be the same as the structure of the first array element 210 shown in FIG. 1, or may be another structural shape.

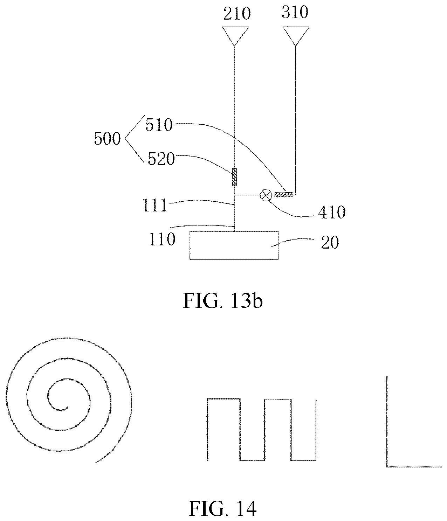

The structural parameters each include at least one of a length, a width, or a shape. In this implementation, the length is a length of a line between two ends of the first power splitter subpart 510 or the second power splitter subpart 520. When the first power splitter subpart 510 and the second power splitter subpart 520 have different lengths, signals in the first dummy 310 and the first array element 210 have different phases. When the first power splitter subpart 510 and the second power splitter subpart 520 have different widths, the signals in the first dummy 310 and the first array element 210 have different amplitudes. When the first power splitter subpart 510 and the second power splitter subpart 520 have different lengths and different widths, the signals in the first dummy 310 and the first array element 210 have different amplitudes and different phases. In some implementations, when shapes of the first power splitter subpart 510 and the second power splitter subpart 520 each are a spiral shape, a loopy shape, or an L-shape (as shown in FIG. 14), in several manners shown in FIG. 14, the structural parameters are shapes. By setting different shapes, the signals in the first dummy 310 and the first array element 210 can have different amplitudes and/or phases. In this implementation, the structural parameters of the first power splitter subpart 510 and the second power splitter subpart 520 may be set, to generate signals with different amplitudes and/or phases in the first dummy 310 and the first array element 210. In this way, a required signal beam form can be obtained.

In the implementation shown in FIG. 13a, the antenna unit 10 includes one first array element 210 and one first dummy 310. When structures of the first array element 210 and the first dummy 310 are the same, the first power splitter subpart 510 and the second power splitter subpart 520 that have different structural parameters are added, so that the signals with different amplitudes and/or phases are generated in the first dummy 310 and the first array element 210. In this way, a required signal beam form can be obtained. In this implementation, the first power splitter subpart 510 is disposed between the first switch component 410 and the first end 111 of the first feed unit 110 (as shown in FIG. 13a). In some implementations, the first power splitter subpart 510 may alternatively be disposed between the first dummy 310 and the first switch component 410 (as shown in FIG. 13b).

In some implementations, when there are two or more first dummies 310, the first power splitter subpart 510 may be disposed between each of the first dummies 310 and the first end 111 of the first feed unit 110; and when there are two or more first array elements 210, the second power splitter subpart 520 may be disposed between each of the first array elements 210 and the first end 111 of the first feed unit 110, to set a shape of an output beam.

In some implementations, the first power splitter subpart 510 and the second power splitter subpart 520 may have a same structural parameter. In this case, the power splitter 500 is configured to split a signal of the first feed unit 110 into two signals and transmit the two signals to the first array element 210 and the first dummy 310, without changing the amplitudes and/or phases of the signals in the first array element 210 and the first dummy 310. When there are more first array elements 210 and more first dummies 310, and there are more first power splitter subparts 510 and second power splitter subparts 520 that have the same structural parameter, the power splitter 500 is configured to split the signal of the first feed unit 110 into more signals and transmit the signals to the first array elements 210 and the first dummies 310.

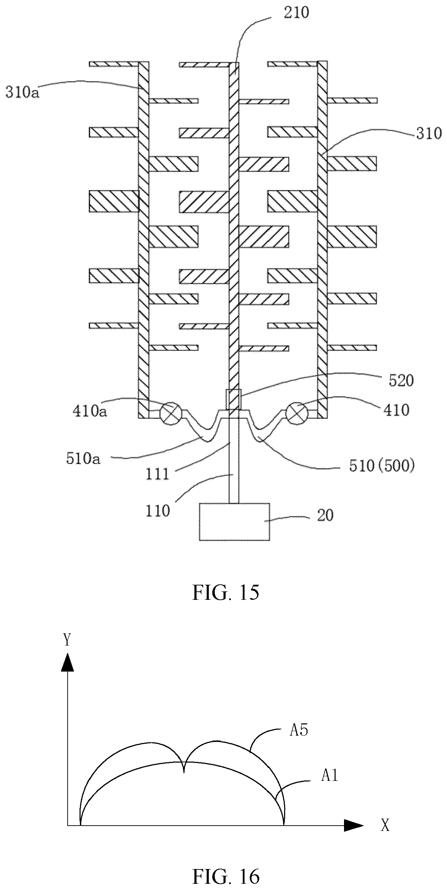

Refer to FIG. 15. In an implementation shown in FIG. 15, the antenna unit 10 includes two first dummies (310 and 310a), two first switch components (410 and 410a), two first power splitter subparts 510 (510 and 510a), and includes one first array element 210 and one second power splitter subpart 520. The two first dummies 310 are denoted as the first dummy 310 and the first dummy 310a respectively, the two first switch components 410 are denoted as the first switch component 410 and the first switch component 410a respectively, and the two first power splitter subparts 510 are denoted as the first power splitter subpart 510 and the first power splitter subpart 510a respectively. The second power splitter subpart 520 is a part of metal structure, of the first array element 210, close to the first feed unit 110. The first power splitter subpart 510 and the first power splitter subpart 510a are metal structures each having a curved part, and structures of the first power splitter subpart 510 and the first power splitter subpart 510a are the same. In this implementation, the first power splitter subpart 510, the first power splitter subpart 510a, and the second power splitter subpart 520 are added for setting an amplitude ratio and a phase difference among signals in the first dummy 310, the first dummy 310a, and the first array element 210. By setting a specific amplitude-phase ratio, the antenna unit 10 can generate a bimodal beam or a beam with more peaks. For example, by designing widths and lengths of the first power splitter subpart 510, the first power splitter subpart 510a, and the second power splitter subpart 520, an amplitude ratio among the signals in the first dummy 310, the first array element 210, and the first dummy 310a may be 2:1:2, and a phase ratio may be 120:100:120. Lengths of the first power splitter subpart 510 and the first power splitter subpart 510a each are 1/18 wavelengths longer than a length of the second power splitter subpart 520. The wavelength is a wavelength of a signal wave transmitted from the first feed unit 110 to the first dummies 310 and 310a. One wavelength corresponds to a changed phase of 360°, and 1/18 wavelengths correspond to a changed phase of 20°. Therefore, the first power splitter subpart 510 may increase a phase of a signal in the first dummy 310 by 20°, and the first power splitter subpart 510a may increase a phase of a signal in the first dummy 310a by 20°. When the first switch component 410 and the first switch component 410a are off, a bimodal beam (as shown by a curve A5 in FIG. 16) may be generated. The beam with a bimodal waveform may be used for simultaneously monitoring two corners in front of a vehicle or two corners behind the vehicle (as shown in FIG. 47), and may further be applied to a roadside radar system (as shown in FIG. 48).

The first power splitter subpart 510 is disposed between the first switch component 410 and the first end 111 of the first feed unit 110, and the first power splitter subpart 510a is disposed between the first switch component 410a and the first end 111 of the first feed unit 110 (as shown in FIG. 15). In some implementations, the first power splitter subpart 510 may be disposed between the first dummy 310 and the first switch component 410, and the second power splitter subpart 520 may be disposed between the first dummy 310a and the first switch component 410a.

In the implementation shown in FIG. 15, there is only one first array element 210. In some implementations, there may be two or more array elements.

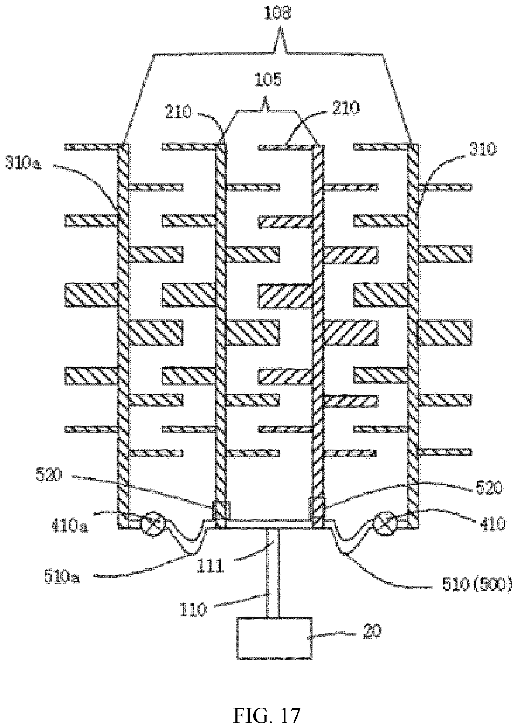

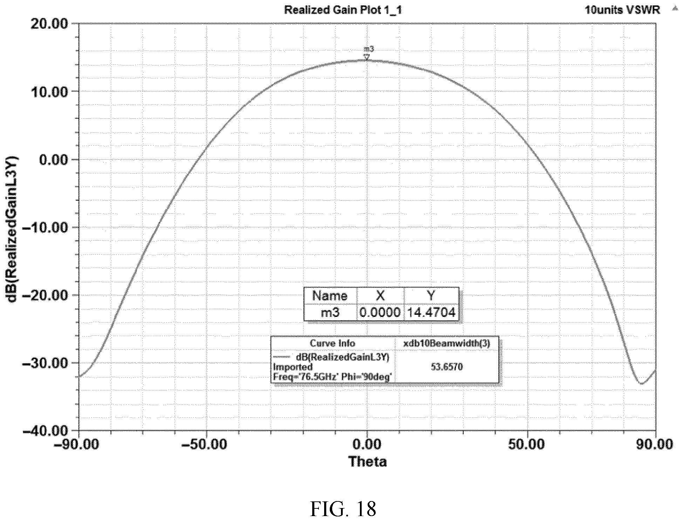

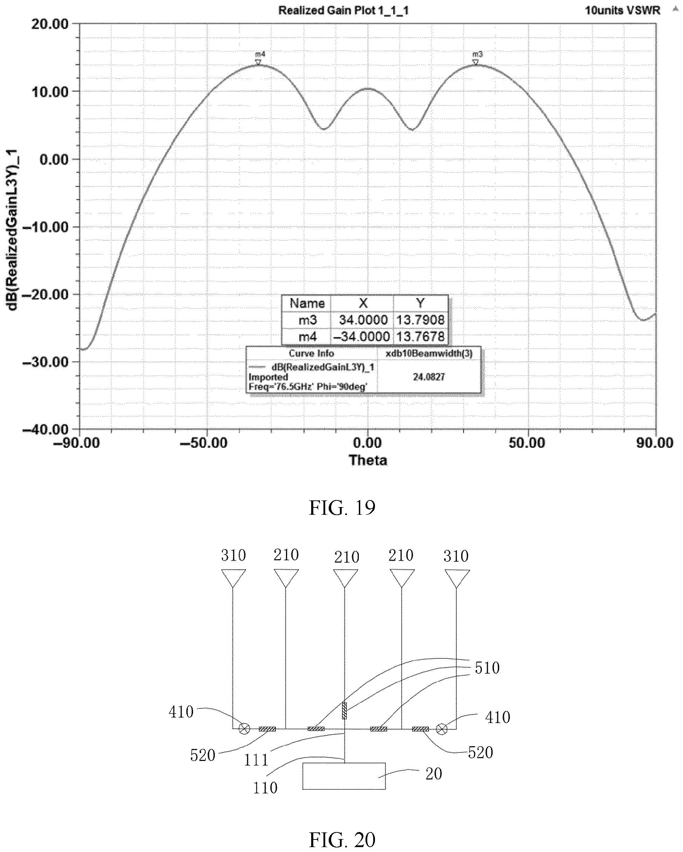

Refer to FIG. 17. Different from the implementation shown in FIG. 15, the antenna unit 10 includes two first array elements 210 and two second power splitter subparts 520, and each of the second power splitter subparts 520 is connected between each of the first array elements 210 and the first end 111 of the first feed unit 110. When the first switch component 410 and the first switch component 410a are on, the two first array elements 210, the two second power splitter subparts 520, and the first feed unit 110 form a fifth antenna 105. A horizontal radiation pattern of the fifth antenna 105 is shown in FIG. 18, and a beam is a beam with a wide sector, and may be used as a short-range beam; or when the first switch component 410 and the first switch component 410a are off, the two first array elements 210, the first dummy 310, the first dummy 310a, the power splitter 500, and the first feed unit 110 form an eighth antenna 108. A horizontal radiation pattern of the eighth antenna 108 is shown in FIG. 19. An amplitude ratio and a phase difference among signals in the first dummy 310, the first dummy 310a, and the two first array elements 210 may be set by disposing the power splitter subparts of the power splitter 500, to implement a bimodal beam that may be used for simultaneously monitoring two corners in front of a vehicle or two corners behind the vehicle.

Refer to FIG. 20. In a possible implementation, the antenna unit 10 includes a plurality of first array elements 210 and a plurality of first dummies 310. The power splitter 500 includes a plurality of first power splitter subpart 510 and a plurality of second power splitter subpart 520. One of the first power splitter subparts 510 is included between each of the first array elements 210 and the first end 111 of the first feed unit 110, and one of the second power splitter subparts 520 is included between each of the first dummies 310 and the first end 111 of the first feed unit 110. The first switch component 410 may be located between the first dummy 310 and the first power splitter subpart 510, or the first switch component 410 may be located between the first power splitter subpart 510 and the first end 111 of the first feed unit 110. When the plurality of first power splitter subparts 510 and the plurality of second power splitter subparts 520 are included, in this implementation, structural parameters of the plurality of first power splitter subparts 510 are set to the same, and structural parameters of the plurality of second power splitter subparts 520 are set to the same. In another implementation, the structural parameters of the plurality of first power splitter subparts 510 may be set to be partly the same, partly different, or completely different, and the structural parameters of the plurality of second power splitter subparts 520 may be set to partly the same, partly different, or completely different. This may be specifically set based on an actual requirement.

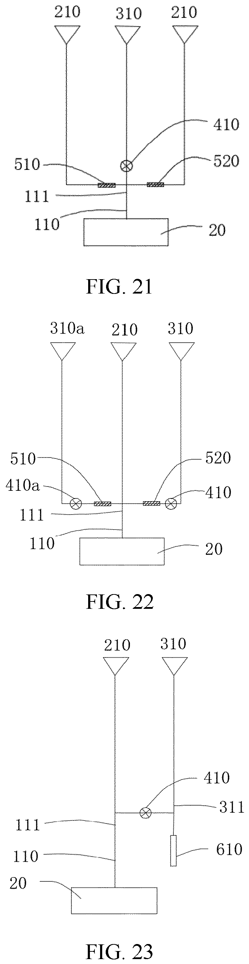

Refer to FIG. 21. In a possible implementation, the antenna unit 10 includes at least two first array elements 210. Each of the first array elements 210 is connected to the first end 111 of the first feed unit 110, the first power splitter subpart 510 is connected between one of the first array elements 210 and the first end 110 of the first feed unit 110, and the second power splitter subpart 520 is connected between the other first array element 210 and the first end of the first feed unit 110. The first power splitter subpart 510 and the second power splitter subpart 520 that have different structural parameters are disposed between the first array element 210 and the first end 111 of the first feed unit 110, so that the first array element 210 generates signals with different amplitudes and/or phases, and then the signals are coupled to a signal in another first array element 210 or the first dummy 310 to form a required beam form.

Refer to FIG. 22. In a possible implementation, the antenna unit 10 includes at least two first dummies (310 and 310a). Each of the first dummies (310 and 310a) is connected to the first end 111 of the first feed unit 110. The first power splitter subpart 510 of the power splitter 500 is connected between the first dummy 310a and the first end 111 of the first feed unit 110, and the second power splitter subpart 520 of the power splitter 500 is connected between the other first dummy 310 and the first end 110 of the first feed unit 110. In this implementation, the antenna unit 10 includes the two first dummies 310 that are denoted as the first dummy 310 and the first dummy 310a respectively. As shown in FIG. 22, the second power splitter subpart 520 is included between the first dummy 310 and the first end 111 of the first feed unit 110, and the first power splitter subpart 510 is included between the first dummy 310a and the first end 111 of the first feed unit 110. The first power splitter subpart 510 and the second power splitter subpart 520 have different structural parameters, so that signals in the first dummy 310 and the first dummy 310a have different amplitudes and/or phases, and a beam form of a signal jointly radiated by the first dummy 310 and the first array element 210 when the first switch component 410 is off is different from a beam form of a signal jointly radiated by the first dummy 310a and the first array element 210 when the first switch component 410a is off. In some cases, a beam with a tilt angle may be formed. In another implementation, there may be more first dummies 310 and more power splitter subparts of the power splitter 500, and structural parameters of the power splitter subparts may be partly different or completely different. This may be specifically set based on an actual requirement.

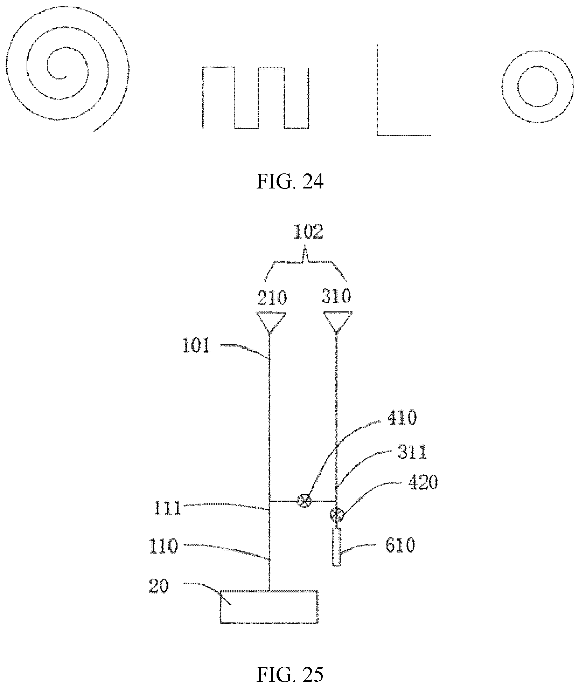

Refer to FIG. 23. Different from the implementation shown in FIG. 1, in a possible implementation, the antenna unit 10 further includes a branching part 610. The branching part 610 is connected to a first end 311 of the first dummy 310. The first end 311 of the first dummy 310 is an end closer to the first feed unit 110. The branching part 610 is configured to change a status of a tail end of the first dummy 310, to change a radiation characteristic of the first dummy 310. The radiation characteristic of the first dummy 310 is an amplitude-phase characteristic of a signal in the first dummy 310, and the amplitude-phase characteristic of the signal include an amplitude and a phase of the signal. When the first switch component 410 is in an on state, the first array element 210 and the first feed unit 110 form a first antenna 101. In this case, because the first end 311 of the first dummy 310 is connected to the branching part 610, a structural form of the first dummy 310 changes. After a signal in the first array element 210 is coupled to the first dummy 310 with a changed status, a signal in the first dummy 310 with a changed status changes. When a changed signal is coupled to the signal in the first array element 210, a beam form of the signal in the first array element 210 is changed, for example, a beam with a tilt angle may be generated. When the first switch component 410 is in an off state, because of the branching part 610, beam forms of signals simultaneously generated by the first dummy 310 and the first array element 210 also change. A shape of the branching part 610 may be set based on an actual requirement. As shown in FIG. 24, the shape includes a spiral shape, a loopy shape, an L-shape, or a disc shape. The branching part 610 may alternatively be a microstrip. A size of the branching part 610 may be set based on an actual requirement. For example, the branching part 610 may be half a medium wavelength, and a branching part 610a may be half a medium wavelength. The "medium" in the medium wavelength is a medium on a substrate 700, and the medium wavelength is a wavelength of an electromagnetic wave through the medium on the substrate 700. In other words, a length of the branching part 610 is related to a property of the medium.

Refer to FIG. 25. Different from the implementation shown in FIG. 23, in a possible implementation, the antenna unit 10 further includes a second switch component 420. The second switch component 420 is located between the branching part 610 and the first end 111 of the first dummy 310, and the branching part 610 is connected to the first end 311 of the first dummy 310 via the second switch component 420. The second switch component 420 is configured to control a status of a connection of the first dummy 310 to the branching part 610. In this implementation, the second switch component 420 is configured to control the status of the connection of the branching part 610 to the first dummy 310, so that the antenna unit 10 can form more antennas. For example, when both the first switch component 410 and the second switch component 420 are in an on state, the first array element 210 and the first feed unit 110 form a first antenna 101; when the first switch component 410 is in an on state and the second switch component 420 is in an off state, the first array element 210 and the first feed unit 110 form the first antenna 101, where the first dummy 310 and the branching part 610 change a beam form of a signal in the first array element 210; or when the first switch component 410 is in an off state and the second switch component 420 is in an on state, the first array element 210, the first dummy 310, and the first feed unit 110 form a second antenna 102.

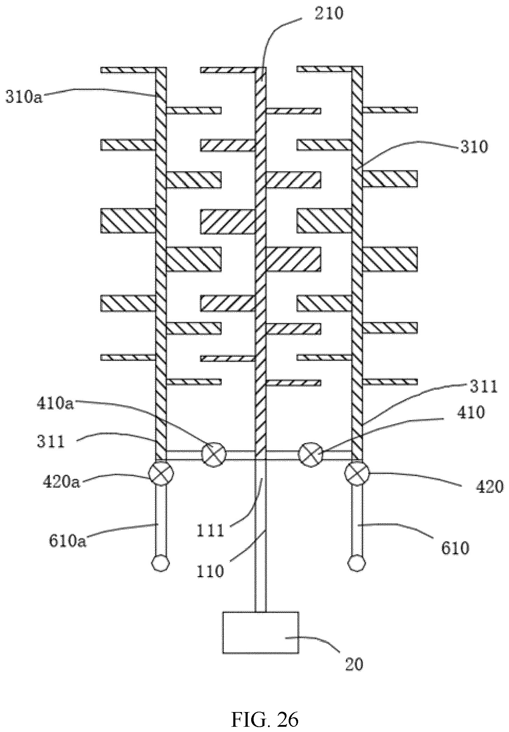

Refer to FIG. 26. Different from the implementation shown in FIG. 25, in a possible implementation, the antenna unit 10 includes a plurality of first dummies 310, a plurality of second switch components 420, and a plurality of branching parts 610. One of the branching parts 610 is disposed at the first end 311 of each of the first dummies 310, and the branching part 610 is connected to the first end 311 of the first dummy 310 via one of the second switch components 420. In the implementation shown in FIG. 26, there are two first dummies 310, two second switch components 420, and two branching parts 610. The two first dummies are denoted as 310 and 310a respectively, the two second switch components are denoted as 420 and 420a respectively, and the two branching parts are denoted as 610 and 610a respectively. The branching part 610 is connected to the first end 311 of the first dummy 310 via the second switch component 420, the branching part 610a is connected to the first end 311 of the first dummy 310a via the second switch component 420a, and the branching part 610 and the branching part 610a are configured to change radiation characteristics of the first dummy 310 and the first dummy 310a respectively.

The radiation characteristics of the first dummy 310 and the first dummy 310a are amplitude-phase characteristics of signals radiated by the first dummy 310 and the first dummy 310a, and the amplitude-phase characteristics of the signals include amplitudes and phases of the signals. Lengths and thicknesses of the branching part 610 and the branching part 610a may be set based on a requirement, and the thicknesses of the branching part 610 and the branching part 610a may be the same as or different from a thickness of a trunk part of a corresponding dummy.

Still refer to FIG. 26. In this implementation, structures of the first dummy 310, the first dummy 310a, and the first array element 210 are the same. The branching part 610 and the branching part 610a are configured to increase lengths of the first dummy 310 and the first dummy 310a. When the first switch component 410 and the first switch component 410a are both disconnected, and the second switch component 420 and the second switch component 420a are off, a signal of the first feed unit 110 is directly transmitted to the first array element 210. A signal of the first array element 210 is coupled to the first dummy 310 and the first dummy 310a. The signal is radiated after being transmitted to the first dummy 310 and the first dummy 310a. After the second switch component 420 and the second switch component 420a are off, statuses of the first ends 311 of the first dummy 310 and the first dummy 310a change. As the statuses of the first ends 311 change, amplitudes and phases of signals in the first dummy 310 and the first dummy 310a may be changed. In this case, a bimodal waveform is generated when the signals with changed amplitudes and phases in the first dummy 310 and the first dummy 310a are coupled to the signal in the first array element 210. In other words, compared with the implementation shown in FIG. 5, a bimodal waveform is generated after the change of the statuses of the first ends 311 of the first dummy 310 and the first dummy 310a.

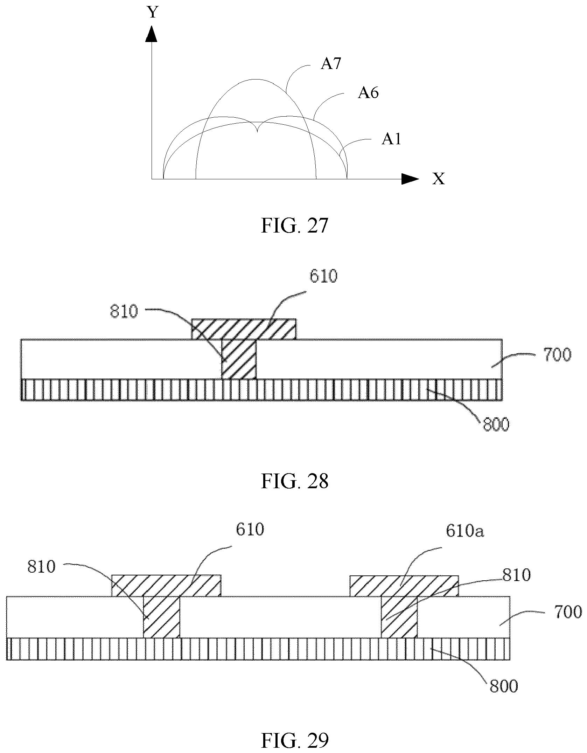

Refer to FIG. 27. When the first switch component 410, the first switch component 410a, the second switch component 420, and the second switch component 420a are all in an on state, a beam generated by an antenna including the first array element 210 and the first feed unit 110 is shown by a curve A1 in FIG. 27, and is a low-gain unimodal beam with a wide waveform; when the first switch component 410 and the first switch component 410a are in an on state, and the second switch component 420 and the second switch component 420a are in an off state, a beam generated by an antenna including the first array element 210 and the first feed unit 110 is shown by a curve A6 in FIG. 27, where because the first end 311s of the first dummy 310 and the first dummy 310a are connected to the branching part 610 and the branching part 610a respectively, a beam form changes, a bimodal waveform is generated, and an included angle between two peaks may be set by adjusting a structure of the first dummy 310, the first dummy 310a, the branching part 610, and the branching part 610a, where a beam with the bimodal waveform may be used for simultaneously monitoring two corners in front of a vehicle or two corners behind the vehicle, and may further be applied to a roadside radar system; or when the first switch component 410 and the first switch component 410a are in an off state and the second switch component 420 and the second switch component 420a are in an on state, a beam generated by an antenna including the first array element 210, the first dummy 310, the first dummy 310a, and the first feed unit 110 is shown by a curve A7 in FIG. 27, and is a high-gain unimodal narrow pencil beam with a narrow waveform.

In another implementation, there may be three or more first dummies 310 and three or more branching parts 610, and a shape and a size of each of the branching parts 610 may be set based on an actual condition.

Refer to FIG. 28. Based on the implementation shown in FIG. 23, in a possible implementation, the antenna unit 10 further includes a ground plane 800, and one end, of the branching part 610, farther away from the first dummy 310 is connected to the ground plane 800. Specifically, the branching part 610 may be connected to the ground plane 800 by using a through-hole 810. After the branching part 610 is grounded, the tail end of the first dummy 310 becomes longer or larger, and the amplitude and the phase of the signal in the first dummy 310 are also changed.

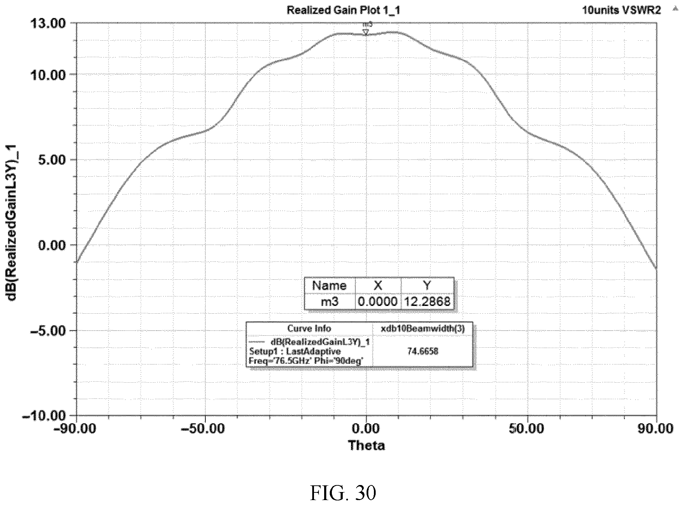

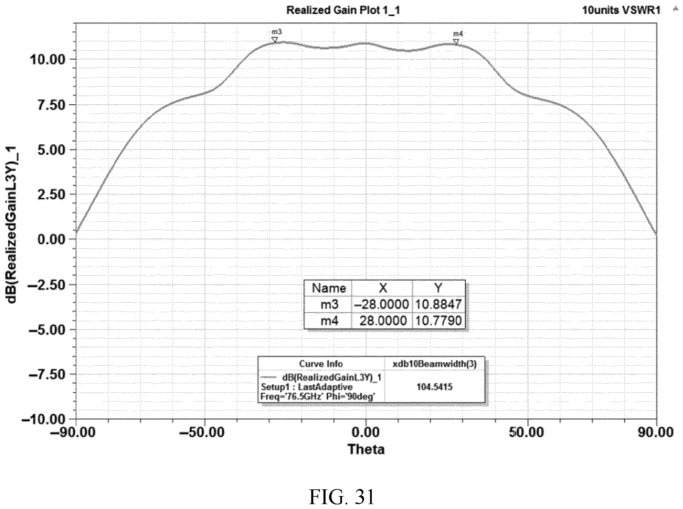

Refer to FIG. 29. Based on the implementation shown in FIG. 26, the antenna unit 10 further includes the ground plane 800, and ends, of the two branching parts 610, farther away from the first dummy 310 are connected to the ground plane 800. The two branching parts are denoted as 610 and 610a respectively. Specifically, the branching part 610 or the branching part 610a may be connected to the ground plane 800 by using 810. After the branching part 610 and the branching part 610a are grounded, the first dummy 310 and the first dummy 310a become longer, and amplitudes and phases of signals in the first dummy 310 and the first dummy 310a are also changed. A signal with a changed amplitude and phase is coupled to the signal in the first array element 210 to form a bimodal waveform. In this implementation, the branching part 610 and the branching part 610a are connected to the ground plane 800, so that a change range of the amplitudes and the phases of the signals in the first dummy 310 or the first dummy 310a is larger. Refer to FIG. 30 and FIG. 31. When the first switch component 410, the first switch component 410a, the second switch component 420, and the second switch component 420a are all in an on state (refer to FIG. 26), a horizontal radiation pattern of a beam generated by an antenna including the first array element 210 and the first feed unit 110 is shown in FIG. 30, and a low-gain unimodal beam with a wide waveform is generated; or when the first switch component 410 and the first switch component 410a are in an on state, and the second switch component 420 and the second switch component 420a are in an off state, a horizontal radiation pattern of a beam generated by an antenna including the first array element 210 and the first feed unit 110 is shown in FIG. 31, where because the first ends 311 of the first dummy 310 and the first dummy 310a are connected to the branching part 610 and the branching part 610a respectively, a beam form changes, and a bimodal waveform is generated.

It should be noted that, when the antenna unit 10 has more branching parts 610, the branching parts 610 may further be connected to the ground plane 800. This may be specifically set based on an actual requirement, and details are not described herein again.

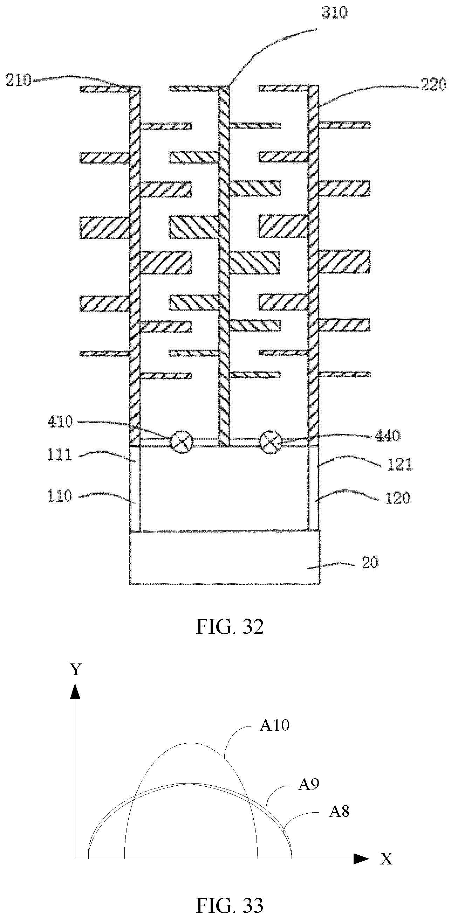

Refer to FIG. 32. Different from the implementation shown in FIG. 1, in a possible implementation, the antenna unit 10 further includes a second array element 220, a second feed unit 120, and a fourth switch component 440. The second feed unit 120 is configured to transmit an electrical signal, the second array element 220 is configured to radiate or receive a signal, the second array element 220 is connected to a first end 121 of the second feed unit 120, and the fourth switch component 440 is connected between the first dummy 310 and the first end 121 of the second feed unit 120, and is configured to control a status of a connection of the first dummy 310 to the second feed unit 120. When the fourth switch component 440 is in an on state, the first dummy 310 is disconnected from the second feed unit 120; or when the fourth switch component 440 is in an off state, the first dummy 310 is connected to the second feed unit 120. The second array element 220 is an array element connected to the second feed unit 120.

Structures of the second feed unit 120 and the first feed unit 110 may be the same or different, and may be formed by metal graphics. In this implementation, the first dummy 310 is connected to the first feed unit 110 and the second feed unit 120, so that signals in the first feed unit 110 and the second feed unit 120 can be simultaneously radiated, with simultaneous excitation, after being overlapped in the first dummy 310. On the one hand, a longer and narrower long-range pencil beam can be reconfigured. On the other hand, an arrangement spacing may be reduced. The arrangement spacing is a spacing between the first feed unit 110 and the second feed unit 120. As an angular position at which a grating lobe appears is increased, an angle measurement unambiguous range becomes larger. The grating lobe is a wave crest that has a same level as a main lobe. Refer to FIG. 33. When the first switch component 410 is off and the fourth switch component 440 is on, a beam generated by an antenna including the first array element 210, the first dummy 310, and the first feed unit 110 is shown by a curve A8 in FIG. 33, and is a medium-range wide beam; when the first switch component 410 is on and the fourth switch component 440 is off, a beam generated by an antenna including the second array element 220, the first dummy 310, and the second feed unit 120 is shown by a curve A9 in FIG. 33, and is a medium-range wide beam; or when the first switch component 410 is off and the fourth switch component 440 is off, a beam generated by an antenna including the first array element 210, the second array element 220, the first dummy 310, the first feed unit 110, and the second feed unit 120 is shown by a curve A10 in FIG. 33, and is a long-range narrow beam.

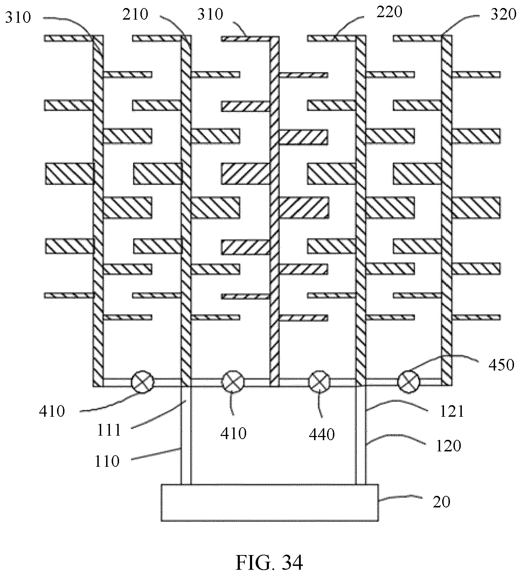

Refer to FIG. 34. Different from the implementation shown in FIG. 32, in a possible implementation, there may be two or more first dummies 310, and the antenna unit 10 further includes a second dummy 320. The second dummy 320 is connected to the first end 121 of the second feed unit 120 via a fifth switch component 450, and the fifth switch component 450 is configured to control a status of a connection of the second dummy 320 to the first end 121 of the second feed unit 120. The second dummy 320 may also be one, two, or more. This may be specifically set based on an actual requirement. The second dummy 320 is a dummy connected to the second feed unit 120.

In some implementations, different from the implementation shown in FIG. 32, there may be two or more first array elements 210 and two or more second array elements 220. Quantities of first array elements 210 and second array elements 220 may be the same or different, and may be set based on an actual requirement.

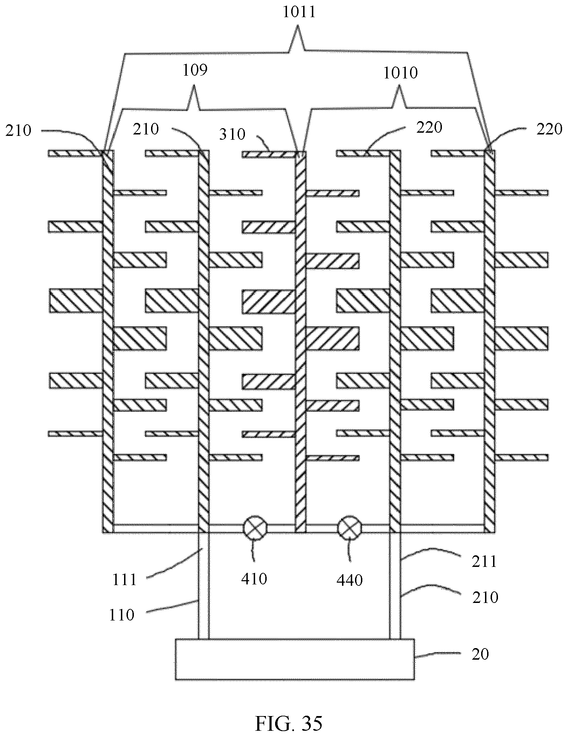

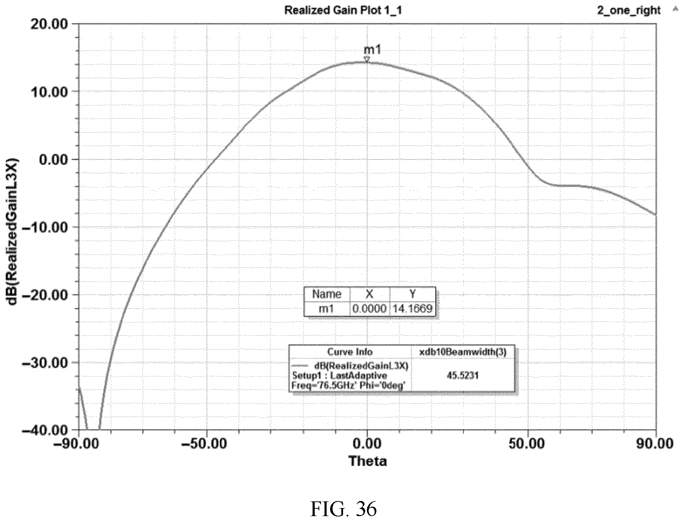

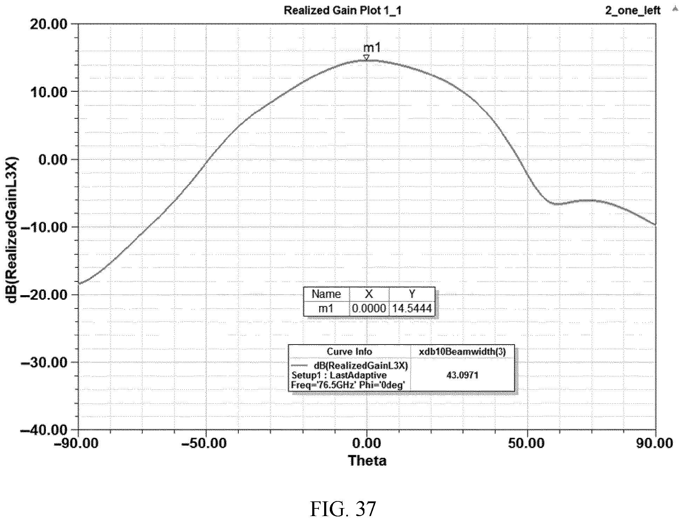

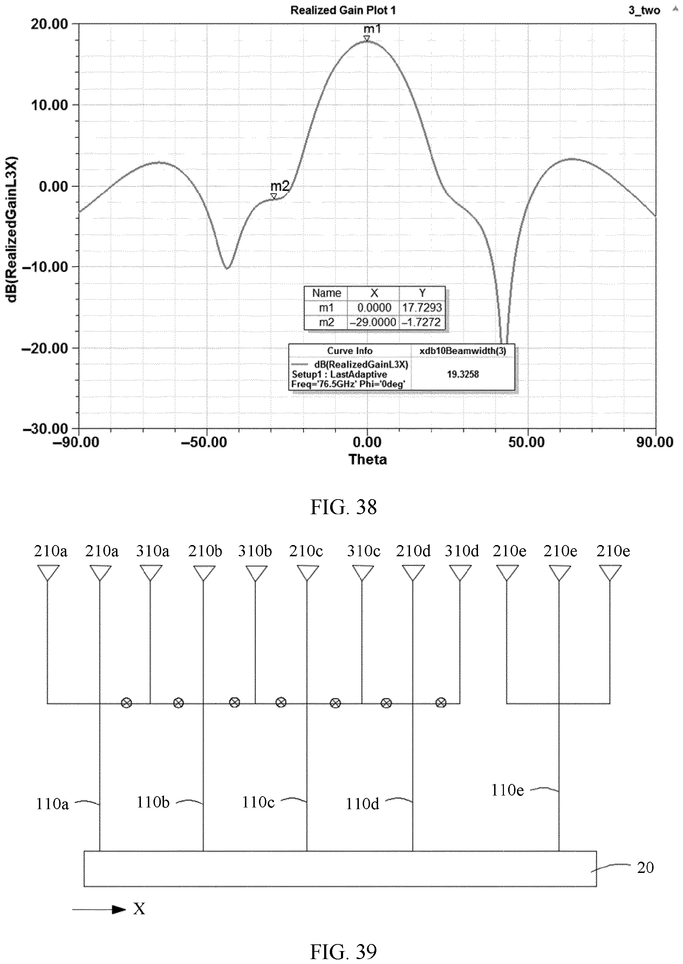

Refer to FIG. 35. In an implementation, the antenna unit 10 includes two first array elements 210 and two second array elements 220. The two first array elements 210 are electrically connected to the first feed unit 110, and the two second array elements 220 are electrically connected to the second feed unit 120. When the first switch component 410 is off and the fourth switch component 440 is on, the two first array elements 210, the first dummy 310, and the first feed unit 110 form a ninth antenna 109. FIG. 36 is a horizontal radiation pattern of a beam generated by the ninth antenna 109, and the beam is a high-gain medium-range wide beam with a wide waveform; or when the first switch component 410 is on and the fourth switch component 440 is off, the two second array elements 220, the first dummy 310, and the second feed unit 120 form a tenth antenna 1010. FIG. 37 is a horizontal radiation pattern of a beam generated by the tenth antenna 1010, and the beam is a high-gain medium-range wide beam with a wide waveform; or when the first switch component 410 is off and the fourth switch component 440 is off, the two first array elements 210, the two second array elements 220, the first dummy 310, the first feed unit 110, and the second feed unit 120 form an eleventh antenna 1011. FIG. 38 is a horizontal radiation pattern of a beam generated by the eleventh antenna 1011, and the beam is a long-range narrow beam with a higher gain and a wider waveform.

In the foregoing implementations, two feed units, namely, the first feed unit 110 and the second feed unit 120, are included. In another implementation, more feed units, more array elements, and more dummies may further be included. This may be specifically set based on an actual requirement. As long as one of the dummies is connected to at least two feed units, simultaneous excitation may be implemented, to generate a long-range narrow beam with a higher gain and a wider waveform, and an arrangement spacing may further be reduced. The arrangement spacing is a spacing between the first feed unit 110 and the second feed unit 120. As an angular position at which a grating lobe appears is increased, an angle measurement unambiguous range becomes larger. Examples are provided below for description.

Refer to FIG. 39. In an implementation, the antenna unit 10 includes five antennas, to form a 1T4R array. That is, there are one transmit antenna and four receive antennas. The five antennas are electrically connected to the chip 20. As shown in FIG. 39, the antenna unit 10 includes four receive antennas and one transmit antenna. A first receive antenna includes a first feed unit 110a and an array element and a dummy that are connected to the first feed unit. A second receive antenna includes a first feed unit 110b and an array element and a dummy that are connected to the first feed unit. A third receive antenna includes a first feed unit 110c and an array element and a dummy that are connected to the first feed unit. A fourth receive antenna includes a first feed unit 110d and an array element and a dummy that are connected to the first feed unit. The transmit antenna includes a first feed unit 110e and an array element connected to the first feed unit. Specifically, the first feed unit 110a is connected to two first array elements 210a and a first dummy 310a, a first feed unit 120b is connected to the first dummy 310a, the first array element 210a, a first dummy 310b, a first feed unit 120c is connected to the first dummy 310b, a first array element 210c, and a first dummy 310c, a first feed unit 120d is connected to the first dummy 310c, a first array element 210d, and a first dummy 310d, and the first feed unit 110e is connected to three first array elements 210e. Further, optionally, structures of the dummies and the array elements in FIG. 39 are the same, and structures of all the first feed units 110 are the same. In this implementation, a distance between a dummy and an array element that are adjacent to each other is half a wavelength. The wavelength is a wavelength of a signal wave transmitted from the first feed unit to the dummy or the array element. In this case, a distance between two adjacent feed units along the first direction X is one wavelength. That is, a distance between the first feed unit 110b and the first feed unit 110a or the second feed unit 120c along the first direction X is one wavelength, and a distance between the first feed unit 120d and the first feed unit 110c or the first feed unit 110e along the first direction X is one wavelength.

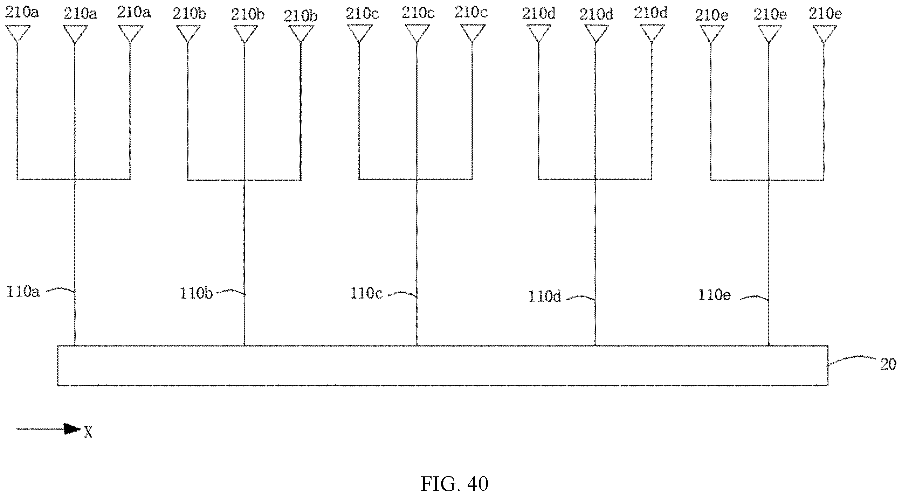

Refer to FIG. 40. In an implementation, the antenna unit 10 includes five antennas, to form a 1T4R array. That is, there are one transmit antenna and four receive antennas. The five antennas are electrically connected to the chip 20. As shown in FIG. 40, the antenna unit 10 includes four receive antennas and one transmit antenna. The four receive antennas include first feed units 110a, 110b, 110c, and 1 10d and array elements connected to the first feed units, and the transmit antenna includes a first feed unit 110e and an array element connected to the first feed unit. Specifically, the first feed unit 110a is connected to three first array elements 210a, the first feed unit 110b is connected to three first array elements 210b, the first feed unit 110c is connected to three first array elements 210c, the first feed unit 110d is connected to three first array elements 210d, and the first feed unit 110e is connected to three first array elements 210e. A distance between adjacent array elements is half a wavelength. The wavelength is a wavelength of a signal wave transmitted from a feed unit to an array element. In this case, a vertical distance between two adjacent feed units is 1.5 wavelengths. That is, a distance between the first feed unit 110b and the first feed unit 110a or the second feed unit 120c along the first direction X is 1.5 wavelengths, and a distance between the first feed unit 120d and the first feed unit 110c or the first feed unit 110e along the first direction X is 1.5 wavelengths.

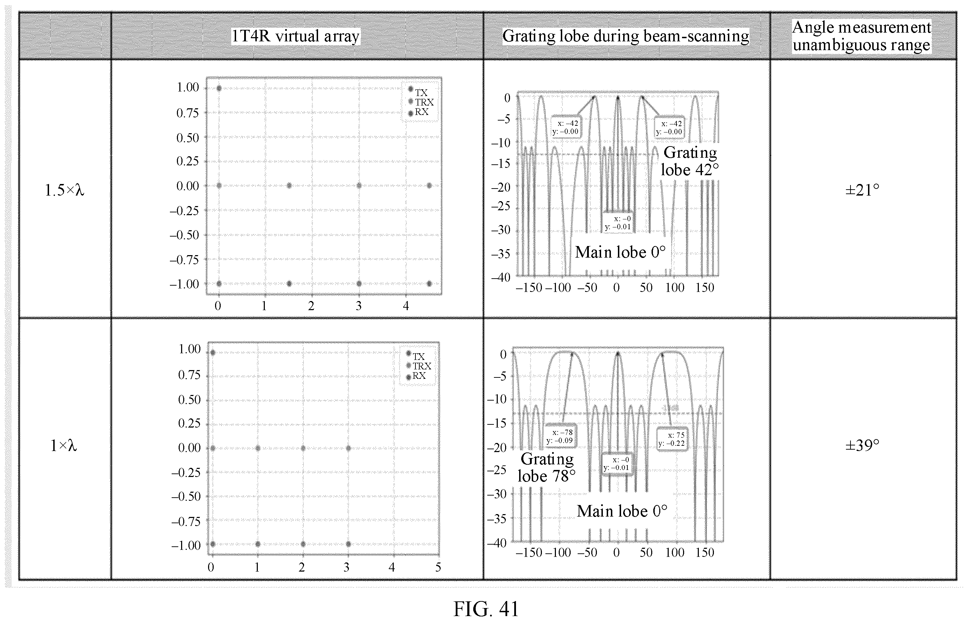

Effect data shown in FIG. 41 is obtained by performing a simulation test on the solutions shown in FIG. 39 and FIG. 40. When a receiving arrangement spacing in FIG. 39 is 1×λ, λ represents a wavelength, where the wavelength is a wavelength of a signal wave transmitted from a feed unit to a dummy or an array element, a grating lobe appears at 78°, and an angle measurement unambiguous range is ±39°. When a receiving arrangement spacing in FIG. 40 is 1.5×λ, a grating lobe appears at 42°, and an angle measurement unambiguous range is ±21°. It indicates that, compared with the solution in FIG. 40, the solution in FIG. 39 increases the angle position of the grating lobe, and increases the angle measurement unambiguous range.

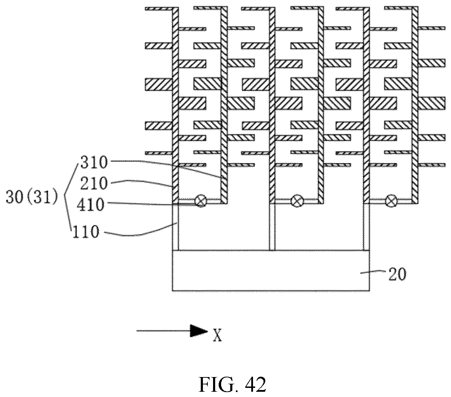

Refer to FIG. 42. In a possible implementation, the antenna unit 10 includes a plurality of antenna array element groups 30. The first feed unit 110, the first array element 210, the first dummy 310, and the first switch component 410 belong to a first antenna array element group 31 in the plurality of antenna array element groups 30, and the plurality of antenna array element groups 30 are arranged along the first direction X. A structure of another antenna array element group 30, other than the first antenna array element group 31, in the plurality of antenna array element groups 30 may be completely the same as, partly the same as, or completely different from a structure of the first antenna array element group 31. In this implementation, the plurality of antenna array elements 30 may all be first antenna array element groups 31. As shown in FIG. 42, this implementation may be used to implement more forms of beams for wider application. The first antenna array element group 31 may alternatively include a plurality of first array elements 210, a plurality of first dummies 310, and a plurality of first switch components 410. This is not limited in this application.

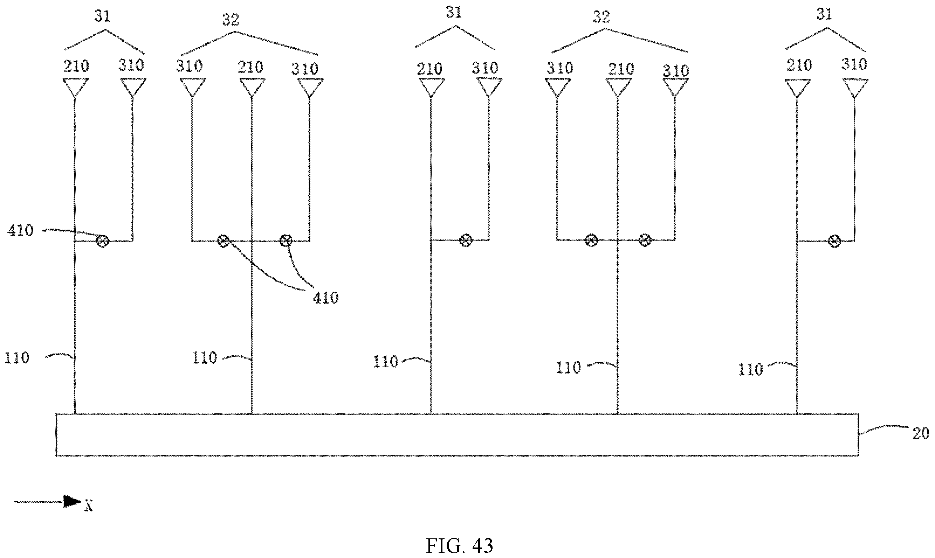

Refer to FIG. 43. In some implementations, the plurality of antenna array element groups 30 include a plurality of first antenna array element groups 31 and a plurality of second antenna array element groups 32. The first antenna array element groups 31 and the second antenna array element groups 32 are disposed apart. Different from the first antenna array element groups 31, the second antenna array elements 32 each include two first dummies 310.

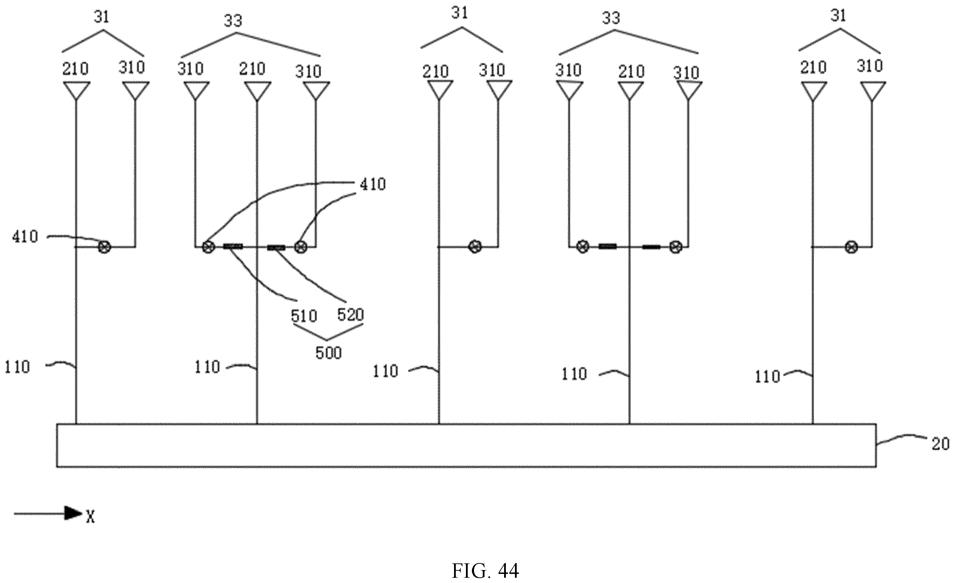

Refer to FIG. 44. In some implementations, the plurality of antenna array elements 30 include a plurality of first antenna array element groups 31 and a plurality of third antenna array element groups 33. The first antenna array element groups 31 and the third antenna array element groups 33 are disposed apart. Different from the first antenna array element groups 31, the third antenna array element groups 33 each include two first dummies 310 and a power splitter 500. The power splitter 500 includes a first power splitter subpart 510 and a second power splitter subpart 520 that have different structural parameters. The first power splitter subpart 510 and the second power splitter subpart 520 are separately disposed between the two first dummies 310 and the first end 111 of the first feed unit 110.

In some implementations, the antenna array element groups 30 may include more parts, and may further include a branching part. This may be specifically set based on an actual requirement.

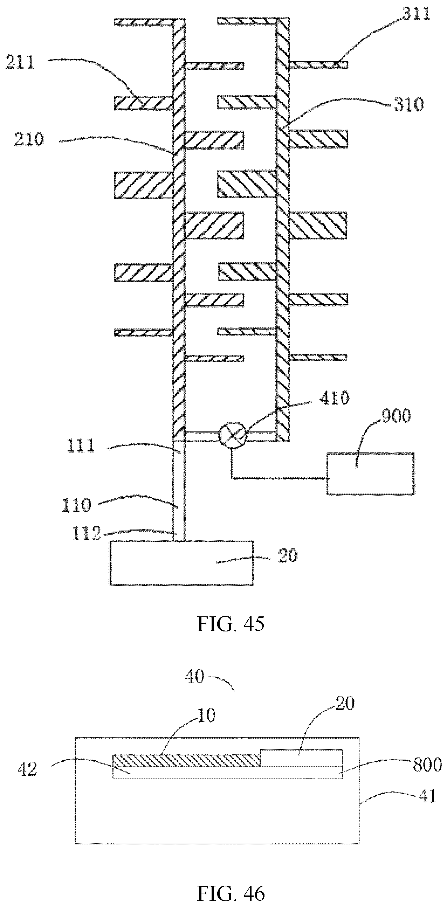

Refer to FIG. 45. In a possible implementation, the antenna unit 30 further includes a switch component control unit 900, and the switch component control unit 900 is configured to control on and off of the first switch component 410. In another implementation, the switch component control unit 900 may further control on and off of the second switch component 420, a third switch component 430, a fourth switch component 440, and a fifth switch component 450. When the first switch component 410, the second switch component 420, the third switch component 430, the fourth switch component 440, and the fifth switch component 450 are diode switches, the switch component control unit 900 is disposed in the chip 20, may be a logic control circuit in the chip 20, and is configured to control on and off of the diode switches; or when the first switch component 410, the second switch component 420, the third switch component 430, the fourth switch component 440, and the fifth switch component 450 are photosensitive switches, the switch component control unit 900 may be an independent structural component disposed on the substrate 700, and is configured to control on and off of the photosensitive switches.

Refer to FIG. 46. An implementation of this application further provides a radar 40. The radar 40 includes a housing 41 and the antenna unit 10 according to any one of the foregoing implementations that is located in the housing 41. In this implementation, the radar 40 further includes a circuit board 42. The substrate 700 in the antenna unit 10 may be a substrate in the circuit board 42, and an electronic component in the circuit board 42 and the chip 20 are disposed on the substrate 700. In some implementations, a plurality of different antenna units 10, including at least two antenna units 20 described above, may be disposed on a same circuit board 42, to generate different forms of beams. The circuit board 42 may be an MMIC.

In a possible implementation, the radar 40 further includes a signal processing apparatus. The signal processing apparatus is disposed in the chip 20 and is electrically connected to the first feed unit 110. The signal processing apparatus is configured to process a signal and transmit the signal to the antenna unit 10 for transmission, or the antenna unit 10 transmits a received signal to the signal processing apparatus for processing. The signal processing apparatus may be a mobile data center (Mobile Data Center, MDC).

Refer to FIG. 47. An implementation of this application further provides a terminal device 50. The terminal device 50 includes a main part 51 of the device, a control system 52, and the radar 40 according to the foregoing implementation that is located in the main part 51 of the device. The radar 40 is connected to the control system 52, and the control system 52 obtains information outside the terminal device 50 by using the radar 40, for monitoring a surrounding scenario of the terminal device 50. The terminal device 50 includes a smart home, a smart manufacturing device, or a smart transportation device. The smart home includes a sweeping robot, the smart manufacturing device includes an industrial robot, and the smart transportation device includes a vehicle, an unmanned aerial vehicle, a yacht, and the like. One or more radars 40 may be disposed, and a plurality of types of antenna units 10 may be disposed in a same radar 40. When the terminal device 50 is a vehicle, a plurality of different antenna units 10 may be disposed in a radar 40, or a plurality of radars 40 may be disposed.

Still refer to FIG. 47. For example, the antenna unit 10 shown in FIG. 6 is disposed to monitor a scenario right in front of a vehicle. The antenna unit 10 may generate a short-range wide beam A1, a medium-range wide beam A3, and a long-range narrow beam A4. Two antenna units 10 shown in FIG. 15 are disposed, where one of the antenna units 10 is configured to monitor a scenario at two corners in front of a vehicle, and the other antenna unit monitors a scenario at two corners behind the vehicle. The antenna unit 10 may generate a bimodal beam A5, where an included angle between two peaks of the bimodal beam may be set based on a structure of an array element or a dummy in the antenna unit 10 or an amplitude and a phase of a signal in the array element or the dummy. An antenna unit capable of generating a short-range wide beam A1 may further be disposed to monitor two sides and the rear of the vehicle. As shown in FIG. 47, a vehicle uses the radar 40 including the antenna unit 10, to monitor all scenarios around the vehicle at any angle, and there is high complexity in the scenarios to cope with. In addition, a plurality of antenna units 10 are disposed in the same radar 40, so that a quantity of radars 40 can be reduced, complexity and vehicle arrangement costs can be reduced.

In some implementations, by disposing the antenna unit 10, one antenna unit 10 can generate the short-range wide beam A1, the medium-range wide beam A3, the long-range narrow beam A4, the bimodal beam A5, or a beam with more peaks, thereby implementing beam switching in a plurality of scenarios.

Refer to FIG. 48. An implementation of this application further provides a roadside radar system 60. The roadside radar system 60 is installed at a crossroad or a bend. The roadside radar system 60 includes an installation component and the radar 40 according to the foregoing implementations that is mounted on the installation component. As shown in FIG. 48, the roadside radar system 60 is used to monitor a condition at a crossroad or monitor a speed of a vehicle at a junction. An antenna unit 10 that can generate a bimodal beam is disposed in the radar 40, and the antenna unit 10 may simultaneously generate bimodal beams for monitoring a junction 71 and a junction 72. In another implementation, an antenna unit 10 that can generate a trimodal beam may alternatively be disposed. In some implementations, an antenna unit 10 that can generate a short-range wide beam, a medium-range wide beam, and a long-range narrow beam may alternatively be disposed for monitoring a condition or a speed of a vehicle within different distances and ranges. In some implementations, the roadside radar system 60 is a 24 GHz roadside radar system, and the 24 GHz roadside radar system is a roadside radar system that senses existence, a motion speed, a static distance, an angle, and the like of an object by transmitting or receiving a microwave at around 24.125 GHz.

In the roadside radar system 60 in this application, a corresponding radar 40 may be disposed based on a position and a form of a roadside or a junction, to better monitor different scenarios.

The antenna unit, the radar, and the terminal device provided in embodiments of this application are described in detail above. The principle and embodiments of this specification are described herein with specific examples. The descriptions about the foregoing embodiments are merely provided to help understand the method and core ideas of this application. In addition, a person of ordinary skill in the art can make modifications to specific embodiments and application scopes according to the ideas of this application. Therefore, in conclusion, the content of this specification shall not be construed as a limitation on this application.

## Claims

1. An antenna unit, wherein the antenna unit comprises a first feed unit, a first array element, a first dummy, and a first switch component, the first feed unit is configured to transmit an electrical signal, the first array element is configured to radiate or receive a signal, the first array element is connected to a first end of the first feed unit, and the first switch component is connected between the first dummy and the first end of the first feed unit, and is configured to control a status of a connection of the first dummy to the first feed unit.

2. The antenna unit according to claim 1, wherein the antenna unit further comprises a power splitter, and the power splitter comprises a first power splitter subpart and a second power splitter subpart that have different structural parameters,
wherein
the first power splitter subpart is connected between the first dummy and the first end of the first feed unit, and the second power splitter subpart is connected between the first array element and the first end of the first feed unit;
the antenna unit comprises at least two first array elements, each of the first array elements is connected to the first end of the first feed unit, the first power splitter subpart is connected between one of the first array elements and the first end of the first feed unit, and the second power splitter subpart is connected between another first array element and the first end of the first feed unit; or
the antenna unit comprises at least two first dummies, each of the first dummies is connected to the first end of the first feed unit, the first power splitter subpart is connected between one of the first dummies and the first end of the first feed unit, and the second power splitter subpart is connected between another first dummy and the first end of the first feed unit.

3. The antenna unit according to claim 2, wherein the structural parameters each comprise at least one of a length, a width, or a shape.

4. The antenna unit according to claim 1, wherein the antenna unit further comprises a branching part, and the branching part is connected to a first end of the first dummy.

5. The antenna unit according to claim 4, wherein the antenna unit further comprises a second switch component, the second switch component is located between the branching part and the first end of the first dummy, and the branching part is connected to the first end of the first dummy via the second switch component.

6. The antenna unit according to claim 4, wherein the antenna unit further comprises a ground plane, and one end, of the branching part, farther away from the first dummy is connected to the ground plane.

7. The antenna unit according to claim 1, wherein the antenna unit further comprises a second array element, a second feed unit, and a fourth switch component, the second array element is configured to radiate or receive a signal, the second feed unit is configured to transmit an electrical signal, the second array element is connected to a first end of the second feed unit, and the fourth switch component is connected between the first dummy and the first end of the second feed unit, and is configured to control a status of a connection of the first dummy to the second feed unit.

8. The antenna unit according to claim 1, wherein the antenna unit comprises a plurality of first dummies and a plurality of first switch components, and each of the first dummies is connected to the first end of the first feed unit via one of the first switch components; and/or
the antenna unit comprises a plurality of first array elements, and each of the first array elements is connected to the first end of the first feed unit.

9. The antenna unit according to claim 1, wherein the antenna unit comprises a plurality of antenna array element groups, the first feed unit, the first array element, the first dummy, and the first switch component belong to a first antenna array element group in the plurality of antenna array element groups, and the plurality of antenna array element groups are arranged along a first direction.

10. The antenna unit according to any one of claims 1 to 9, wherein the first switch component comprises at least one of a diode switch, a photosensitive switch, or an adjustable impedance component.

11. The antenna unit according to any one of claims 1 to 9, wherein the antenna unit further comprises a switch component control unit, and the switch component control unit is configured to control on and off of the first switch component.

12. The antenna unit according to any one of claims 1 to 9, wherein the antenna unit further comprises a substrate and a chip disposed on one side of the substrate, and a second end of the first feed unit is electrically connected to the chip.

13. A radar, wherein the radar comprises a housing and the antenna unit according to any one of claims 1 to 12 that is located in the housing.

14. The radar according to claim 13, wherein the radar further comprises a signal processing apparatus, and the signal processing apparatus is electrically connected to the first feed unit.

15. A terminal device, wherein the terminal device comprises a main part of the device, a control system, and the radar according to claim 13 or 14 that is located in the main part of the device, the radar is connected to the control system, and the control system obtains information outside the terminal device by using the radar.

16. The terminal device according to claim 15, wherein the terminal device comprises a smart home, a smart manufacturing device, or a smart transportation device.
